# EUROPEAN PATENT SPECIFICATION

(11) **EP 3 178 278 B1**
(45) Date of publication and mention of the grant of the patent: **19.02.2020**
(21) Application number: 15750589.2
(22) Date of filing: 07.08.2015
(51) Int. Cl.: H04W 72/12, H04W 64/00, H04W 16/32

(54) **SYSTEMS AND METHODS FOR SCHEDULING COMMUNICATION AT AN ACCESS NODE**
SYSTEME UND VERFAHREN ZUR KOMMUNIKATIONSPLANUNG AN EINEM ZUGANGSKNOTEN
SYSTÈMES ET PROCÉDÉS DE PLANIFICATION D'UNE COMMUNICATION AU NIVEAU D'UN NOEUD D'ACCÈS

(30) Priority: 08.08.2014 US 201414454923; 08.08.2014 US 201414454945
(43) Date of publication of application: 14.06.2017
(73) Proprietor: Sprint Spectrum LP, Overland Park, KS 66251-2100 (US)
(72) Inventor: PAWAR, Hemanth, Brambleton, Virginia 20148 (US); KOWDLEY, Shilpa, Brambleton, Virginia 20148 (US); SITARAM, Krishna, Chantilly, Virginia 20151 (US); VIVANCO, Daniel, Sterling, Virginia 20164 (US)
(74) Representative: Michalski Hüttermann & Partner Patentanwälte mbB
(86) International application number: PCT/US2015/044199
(87) International publication number: WO 2016/022912

(56) References cited:
- EP-A1- 2 180 739
- US-A1- 2009 046 632
- US-A1- 2010 216 486
- US-A1- 2012 157 108
- US-A1- 2014 086 198

## Description

### TECHNICAL BACKGROUND

Telecommunication systems, such as cellular networks or other wireless networks, use various network links throughout the network to communicate. For example, an access node may use a network link to communicate with another access node while using a separate network link to communicate with another processing node. Accordingly, the system may rely on a well-established network to provide efficient communication services.

In certain circumstances, a portion of the network may experience high load (e.g., load above a threshold). For example, a communication link may experience large amount of data traffic. Here, the efficiency of the system may suffer due to excessive load on a portion of the system. Accordingly, a system that effectively balances load and distributes traffic throughout the system may be able to provide a high quality service to users of the system.

US 2012/157108 A1 discloses a base station node of a heterogeneous radio access network comprising a terminal locator and a scheduler. The terminal locator obtains an indication of location of a wireless terminal in a cell served by the base station. The scheduler uses the indication of location to assign to the wireless terminal a frequency of a frequency bandwidth usable by the heterogeneous radio access network. The scheduler assigns a frequency from a partitioned portion of the frequency bandwidth if the cell served by the base station node is a micro cell and the wireless terminal is in an edge region of a micro cell. The scheduler also assigns a frequency of the frequency bandwidth if the cell served by the base station node is a micro cell and the wireless terminal is in a center portion of the micro cell.

US 2010/246486 A1 discloses a communication system which includes different kinds of base stations such as a macro base station and a femto base station. The system may execute a method for controlling unfavorably occurring interference due to such different kinds of base stations. In the method, the femto base station sends a femtocell interference indication (FII) report to the resource allocation control unit when user equipment is connected to the femto base station. The FII report contains a request for the allocation of resources to avoid interference. Then the resource allocation control unit establishes a femto interference coordination (FIC) zone according to the received FII report. The FIC zone indicates a particular region used to define resources allocated to the femto base station. The resource allocation control unit may be the macro base station or a self-organizing network (SON) server.

EP 2180739 A1 discloses a base-station transceiver for being operative in a mobile communication system comprising a radio interface being adapted for having a first coverage area surrounding a second coverage area of a second base-station transceiver. The base-station transceiver further comprising a communication unit being adapted for communicating within the mobile communication system using the radio interface and a first portion of radio resources from a pool of radio resources of the mobile communication system, the communication unit further being adapted for receiving an information on an identification and an information on an accessibility of the second base-station transceiver. The base-station transceiver further comprising a controller being adapted for controlling the first portion of radio resources and for determining a second portion of radio resources based on the pool of radio resources, the information on the identification and the information on the accessibility, the second portion of radio resources being such that a mutual interference between the second base-station transceiver using the second portion of radio resources and the base-station transceiver using the first portion of radio resources is reduced. The communication unit being further adapted to communicate an information on the first portion and/or the second portion of radio resources to the second base-station transceiver.

US 2014/086198 A1 discloses a method including determining feasibility for a potential transmission based on a current schedule of active transmissions. The current schedule of active transmissions includes active transmissions over multiple carriers and at multiple transmission rates. The potential transmission is at a start time on a radio frequency carrier at a data transmission rate by a user terminal. A transmission duration is determined if the potential transmission is determined to be feasible. A message is sent to the user terminal, if the potential transmission is determined to be feasible. The message may direct the user terminal to receive the potential transmission on the radio frequency carrier at the data transmission rate at the start time. The current schedule is updated according to the feasibility determination.

US 2009/046632 A1 discloses assigning restricted access nodes to a designated common channel while access terminals that are in active communication with a macro access node may selectively be assigned to the designated channel. An access terminal associated with macro access node may perform a handoff to a different carrier when the access terminal is in the vicinity of a coverage area of a restricted access node. An access terminal associated with a macro access node may perform a handoff to a different carrier based on location information. Access to a restricted access node is controlled based on policy and/or based on operation of an access terminal associated with the restricted access node.

### OVERVIEW

Systems and methods are described for scheduling transmissions from an access node. A location may be determined for a plurality of small cells within an access node signal area wherein the determined locations are relative to an edge of the access node signal area and a location of the access node. Based on the determined locations, a scheduling algorithm may be selected for the access node, where the scheduling algorithm may comprise one of a low proportional fairness scheduling algorithm, a medium proportional fairness scheduling algorithm, and a high proportional fairness scheduling algorithm. Data may then be transmitted from the access node to a plurality of wireless devices based on the selected scheduling algorithm.

### BRIEF DESCRIPTION OF THE DRAWINGS

FIG. 1 illustrates an exemplary communication system to schedule transmissions from an access node.
FIG. 2 illustrates another exemplary system to schedule transmissions from an access node.
FIG. 3 illustrates an exemplary method of scheduling transmissions from an access node.
FIG. 4 illustrates another exemplary system to schedule transmissions from an access node.
FIGS. 5A-5C illustrate exemplary systems to schedule transmissions from an access node.
FIG. 6 illustrates another exemplary method of scheduling transmissions from an access node.
FIG. 7 illustrates an exemplary processing node.

### DETAILED DESCRIPTION

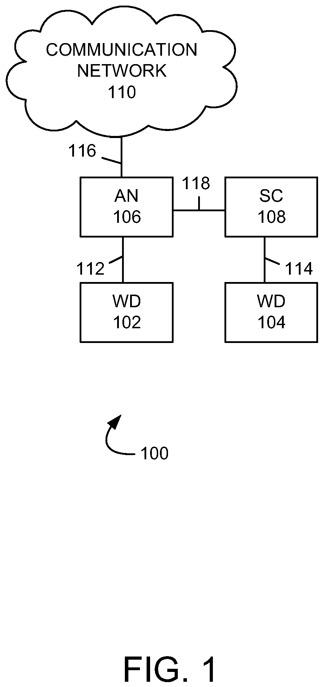

FIG. 1 illustrates an exemplary communication system 100 to schedule transmissions from an access node comprising wireless devices 102 and 104, access node 106, small cell 108, communication network 110, and communication links 112, 114, 116, and 118. Other network elements may be present in the communication system 100 to facilitate communication but are omitted for clarity, such as controller nodes, base stations, base station controllers, gateways, mobile switching centers, dispatch application processors, and location registers such as a home location register or visitor location register. Furthermore, other network elements may be present to facilitate communication between access node 106, small cell 108, and communication network 110 which are omitted for clarity, including additional processing nodes, routers, gateways, and physical and/or wireless data links for carrying data among the various network elements.

Wireless devices 102 and 104 can be any device configured to communicate over communication system 100 using a wireless communication link. For example, wireless devices 102 and 104 can include a cell phone, a smart phone, a computing platform such as a laptop, palmtop, or a tablet, a personal digital assistant, or an internet access device, and combinations thereof. It is noted that while one wireless device is illustrated in FIG. 1 as being in communication with each of access node 106 and small cell 108, any number of wireless devices can be implemented.

Access node 106 and small cell 108 are network nodes capable of providing wireless communications to wireless devices 102 and 104, and can be, for example, a base transceiver station, a radio base station, an eNodeB device, or an enhanced eNodeB device. In an embodiment, access node 106 may comprise a macro cell while small cell 108 may comprise a small cell (e.g., femto cell, pico cell, micro cell, or the like) such that the signal area (e.g., area around each node where a wireless device may detect wireless signals transmitted from the node at a signal level above a threshold) for the macro cell is larger than the signal area for the small cell. As such, a macro cell may transmit wireless signals with a greater signal level (e.g., use a higher transmission power) than a small cell. Access node 106 may communicate with communication network 110 over communication link 116. Small cell 108 may communicate with communication network 110 via access node 106 or using a separate communication link (not illustrated). Access node 106 and small cell 108 may also communicate directly with each other over communication link 118.

Although only access node 106 and small cell 108 are illustrated in FIG. 1, wireless devices 102 and 104 can be in communication with a plurality of access nodes and/or small cells. The plurality of access nodes and/or small cells can be associated with different networks and can support different communication protocols and radio access technologies.

Communication network 110 can be a wired and/or wireless communication network, and can comprise processing nodes, routers, gateways, and physical and/or wireless data links for carrying data among various network elements, including combinations thereof, and can include a local area network, a wide area network, and an internetwork (including the Internet). Communication network 110 can be capable of carrying voice information and other information, for example, to support communications by a wireless device such as wireless device 102. Wireless network protocols may comprise code division multiple access (CDMA) 1xRTT, Global System for Mobile communications (GSM), Universal Mobile Telecommunications System (UMTS), High-Speed Packet Access (HSPA), Evolution Data Optimized (EV-DO), EV-DO rev. A, and Third Generation Partnership Project Long Term Evolution (3GPP LTE). Wired network protocols that may be utilized by communication network 108 comprise Ethernet, Fast Ethernet, Gigabit Ethernet, Local Talk (such as Carrier Sense Multiple Access with Collision Avoidance), Token Ring, Fiber Distributed Data Interface (FDDI), and Asynchronous Transfer Mode (ATM). Communication network 110 may also comprise a wireless network, including base stations, wireless communication nodes, telephony switches, internet routers, network gateways, computer systems, communication links, or some other type of communication equipment, and combinations thereof.

Communication links 112, 114, 116, and 118 can be wired or wireless communication links. Wired communication links can comprise, for example, twisted pair cable, coaxial cable or fiber optic cable, or combinations thereof. Wireless communication links can comprise a radio frequency, microwave, infrared, or other similar signal, and can use a suitable communication protocol, for example, GSM, CDMA, UMTS, HSPA, EV-DO, or 3GPP LTE, or combinations thereof. Other wireless protocols can also be used.

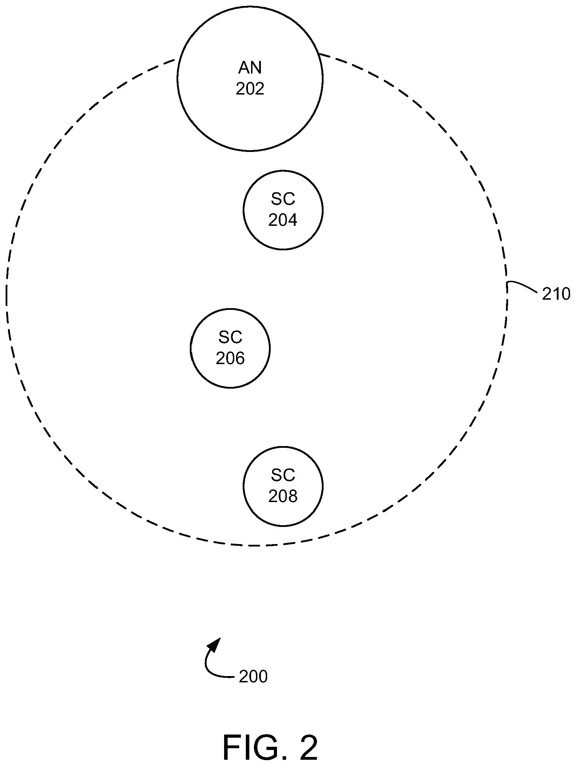

FIG. 2 illustrates an exemplary communication system 200 for scheduling transmissions from an access node. System 200 comprises access node 202, small cells 204, 206, and 208, and signal area 210. Access node 202 may comprise an access node similar to access node 106 and small cells 204, 206, and 208 may comprise a small cell similar to small cell 108.

In operation, access node 202 may establish communication with one or more wireless devices such that access node 202 provides the wireless devices access to a communication network (e.g., communication network 110). Similarly, small cells 204, 206, and 208 may establish communication with one or more wireless devices such that the small cells provide the wireless devices access to a communication network (e.g., communication network 110).

In an embodiment, access node 202 may comprise a macro cell and small cells 204, 206, and 208 may comprise a small cell (e.g., femto cell, pico cell, micro cell, or the like). For instance, the signal area for the macro cell may be larger than the signal area for the small cell. In an embodiment, one or more of small cells 204, 206, and 208 may communicate with access node 202 in order to communicate with a communication network (e.g., communication network 110).

For example, access node 202 may be in communication with a communication network (e.g., communication network 110) such that the communication network provides wireless services for wireless devices. The Communication network may comprise a core network that includes, for example, a controller node, a gateway node, and any other suitable network elements. In an embodiment, one or more of small cells 204, 206, and 208 may communicate with the communication network using access node 202. For example, small cell 204 may transmit data to access node 202 such that the transmitted data is used to enable one or more wireless devices to access an external network (e.g., the Internet) or to enable the one or more wireless devices to use services provided by the core network (e.g., voice services). In an embodiment, small cells 204, 206, and 208 may directly communicate with the core network (e.g., without access node 202). For example, a backhaul for small cells 204, 206, and 208 may connect to the core network and a communication network (e.g., communication network 110), using a wired or wireless communication link (e.g., not via access node 202).

In an embodiment, access node 202 and small cells 202, 204, and 206 may communicate (e.g., with one or more wireless device) over the air. For example, a plurality of carriers that comprise bandwidth for wireless communications (e.g., 2.5 GHz carrier, 1900 Mhz carrier, and 800 Mhz carrier, and the like) may include a plurality of channels (e.g., 5 Mhz channels, 10 Mhz channels, 15 Mhz channels, and the like) that may further be divided into subcarriers.

In an embodiment, system 200 may leverage access node 202 and small cells 204, 206, and 208 in order to provide wireless services over signal area 210. In some examples, small cells 204, 206, and 208 may each comprise a signal area such that the small cells provide wireless services within signal area 210. Here, access node 202 may schedule wireless transmissions from the access node based on the wireless services provided by small cells 204, 206, and 208.

In an embodiment, systems and methods are described for scheduling transmissions from an access node. A location may be determined for a plurality of small cells within an access node signal area wherein the determined locations are relative to an edge of the access node signal area and a location of the access node. Based on the determined locations, a scheduling algorithm may be selected for the access node, where the scheduling algorithm may comprise one of a low proportional fairness scheduling algorithm, a medium proportional fairness scheduling algorithm, and a high proportional fairness scheduling algorithm. Data may then be transmitted from the access node to a plurality of wireless devices based on the selected scheduling algorithm.

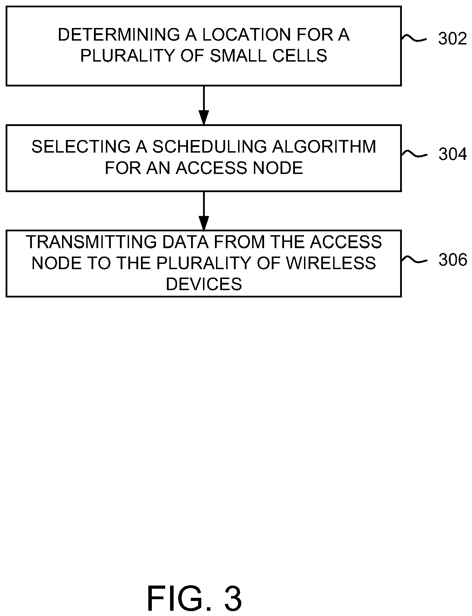

FIG. 3 illustrates an exemplary method scheduling transmissions from an access node. The method will be discussed with reference to the exemplary communication system 200 illustrated in FIG. 2, however, the method can be implemented with any suitable communication system.

Referring to FIG. 3, at step 302, locations may be determined for a plurality of small cells. For example, locations may be determined for small cells 204, 206, and 208. The locations may be determined based on accessing a database that stores small cell locations, signal levels detected (e.g., by access node 202 and/or wireless devices) for the small cells within signal area 210, and any other suitable means.

In an embodiment, the determined locations for small cells 204, 206, and 208 may be relative to access node 202 and/or relative to an edge of signal area 210. For example, the determined locations may be based on a distance from access node 202. A location for small cell 204 may comprise close proximity to access node 202 while a location for small cell 208 may comprise close proximity to an edge of signal area 210. In an embodiment, a location for small cell 206 may not comprise close proximity to access node 202 and may not comprise close proximity to an edge of signal area 210. Here, small cell 206 may comprise a location between access node 202 and an edge of signal area 210.

At step 304, a scheduling algorithm may be selected for the access node based on the determined locations for the small cells. For example, based on the determined locations for small cells 204, 206 and 208, a scheduling algorithm may be selected for access node 202. The scheduling algorithm may comprise one of a low proportional fairness scheduling algorithm, a medium proportional fairness scheduling algorithm, and a high proportional fairness scheduling algorithm. While three types of proportional fairness scheduling algorithms are described, other scheduling algorithms may be used that comprise equal rate proportional fair scheduling, Maximum C/I scheduling, QoS Based scheduling, frequency based scheduling and the like.

At step 306, data may be transmitted from the access node to a plurality of wireless devices based on the selected scheduling algorithm. For example, access node 202 may transmit data to a plurality of wireless devices using the selected scheduling algorithm.

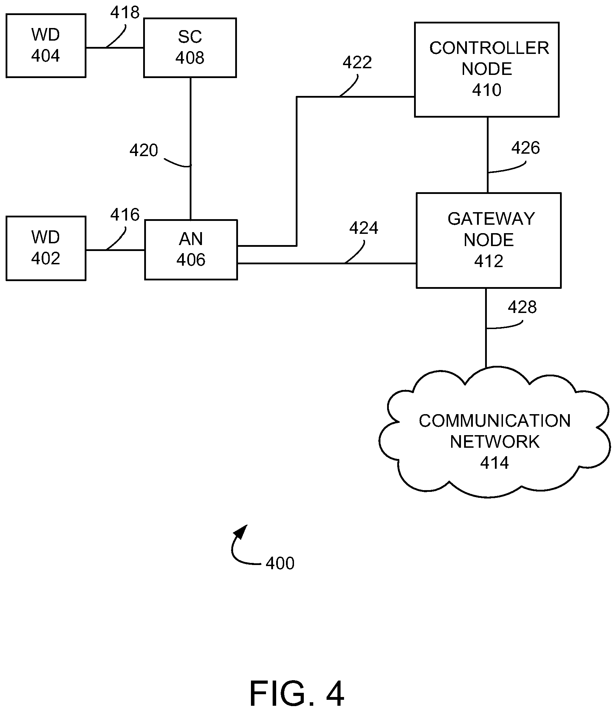

FIG. 4 illustrates another exemplary communication system 400 to schedule transmissions from an access node. Communication system 400 may comprise a wireless devices 402 and 404, access node 406, small cell 408, controller node 410, gateway node 412, communication network 414, and communication links 416, 418, 420, 422, 424, 426, and 428. Other network elements may be present in the communication system 400 to facilitate communication but are omitted for clarity, such as base stations, base station controllers, gateways, mobile switching centers, dispatch application processors, and location registers such as a home location register or visitor location register.

Wireless devices 402 and 404 can be any device configured to communicate over communication system 400 using a wireless communication link. For example, wireless devices 402 and 404 can include a cell phone, a smart phone, a computing platform such as a laptop, palmtop, or a tablet, a personal digital assistant, or an internet access device, and combinations thereof.

Access node 406 and small cell 408 are network nodes capable of providing wireless communications to wireless devices 402 and 404, and can be, for example, a base transceiver station, a radio base station, an eNodeB device, or an enhanced eNodeB device. In an embodiment, access node 406 may comprise a macro cell while small cell 408 may comprise a small cell (e.g., femto cell, pico cell, micro cell, or the like) such that the signal area (e.g., the area around each node where a wireless device may detect wireless signals transmitted from the node at a signal level above a threshold) for the macro cell is larger than the signal area for the small cell. As such, a macro cell may transmit wireless signals with a greater signal level (e.g., use a higher transmission power) than a small cell. In an embodiment, access node 406 can comprise a serving access node for wireless device 402 and rely node 408 can comprise a serving access node for wireless device 404. Access node 406 may communicate with controller node 410 over communication link 422 and with gateway node 412 over communication link 424. Access node 406 and small cell 408 may also communicate directly with each other over communication link 420. In an embodiment, rely node 408 can communicate directly with controller node 410 and gateway node 412 over communication links (not depicted).

Controller node 410 can be any network node configured to manage services within system 400. Controller node 410 may provide other control and management functions for system 400. The controller node 410 can be a single device having various functions or a plurality of devices having differing functions. For example, controller node 410 can include at least one of a multi-cell/multicast coordination entity (MCE), a mobility management entity (MME), a radio network controller (RNC), a mobile switching center (MSC), and a combination thereof.

Controller node 410 can comprise a processor and associated circuitry to execute or direct the execution of computer-readable instructions to obtain information. Controller node 410 can retrieve and execute software from storage, which can include a disk drive, a flash drive, memory circuitry, or some other memory device, and which can be local or remotely accessible. The software may comprise computer programs, firmware, or some other form of machine-readable instructions, and may include an operating system, utilities, drivers, network interfaces, applications, or some other type of software, including combinations thereof. Controller node 410 can receive instructions and other input at a user interface. Controller node 410 can comprise a processor and associated circuitry to execute or direct the execution of computer-readable instructions to obtain information.

Gateway node 412 is a network element which can comprise a processor and associated circuitry to execute or direct the execution of computer-readable instructions. Gateway node 412 may retrieve and execute software from storage, which can include a disk drive, flash drive, memory circuitry, or some other memory device, and which can be local or remotely accessible. The software comprises computer programs, firmware, or some other form of machine-readable instructions, and may include an operating system, utilities, drivers, network interfaces, applications, or some other type of software, including combinations thereof. In an embodiment, gateway node 412 can provide instructions to access node 406 and small cell 408 related to channel selection in communications with wireless devices 402 and 404. For example, gateway node 412 can comprise at least one of a serving gateway (SGW), a packet data network gateway (PDNGW), a cellular gateway (CGW), and a combination thereof.

Communication network 414 can be a wired and/or wireless communication network, and can comprise processing nodes, routers, gateways, and physical and/or wireless data links for carrying data among various network elements, including combinations thereof, and can include a local area network, a wide area network, and an internetwork (including the Internet). Communication network 414 may also comprise base stations, wireless communication nodes, telephony switches, internet routers, network gateways, computer systems, communication links, or some other type of communication equipment, and combinations thereof. Wireless network protocols may comprise code division multiple access (CDMA) 1xRTT, Global System for Mobile communications (GSM), Universal Mobile Telecommunications System (UMTS), High-Speed Packet Access (HSPA), Evolution Data Optimized (EV-DO), EV-DO rev. A, and Third Generation Partnership Project Long Term Evolution (3GPP LTE). Wired network protocols that may be utilized by communication network 414 comprise Ethernet, Fast Ethernet, Gigabit Ethernet, Local Talk (such as Carrier Sense Multiple Access with Collision Avoidance), Token Ring, Fiber Distributed Data Interface (FDDI), and Asynchronous Transfer Mode (ATM).

Communication links 416, 418, 420, 422, 424, 426, and 428 can be wired or wireless communication links. Wired communication links can be, for example, twisted pair cable, coaxial cable or fiber optic cable, or combinations thereof. Wireless communication links can be a radio frequency, microwave, infrared, or other similar signal, and can use a suitable communication protocol, for example, Global System for Mobile telecommunications (GSM), Code Division Multiple Access (CDMA), or Long Term Evolution (LTE), or combinations thereof. Other wireless protocols can also be used.

Other network elements may be present in the communication system 400 to facilitate wireless communication but are omitted for clarity, such as base stations, base station controllers, gateways, mobile switching centers, dispatch application processors, and location registers such as a home location register or visitor location register. Furthermore, other network elements may be present to facilitate communication among access node 406 and small cell 408, controller node 410, gateway node 412, and communication network 414 which are omitted for clarity, including additional processing nodes, routers, gateways, and physical and/or wireless data links for carrying data among the various network elements.

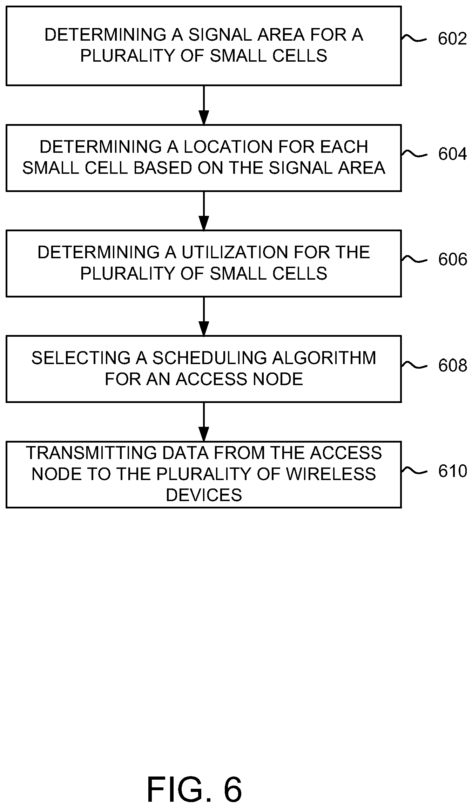

In an embodiment, any of controller node 410, gateway node 412, one or more modules of access node 406, and one or more modules of small cell 408 may perform all or parts of the methods of FIGS. 3 and 6.

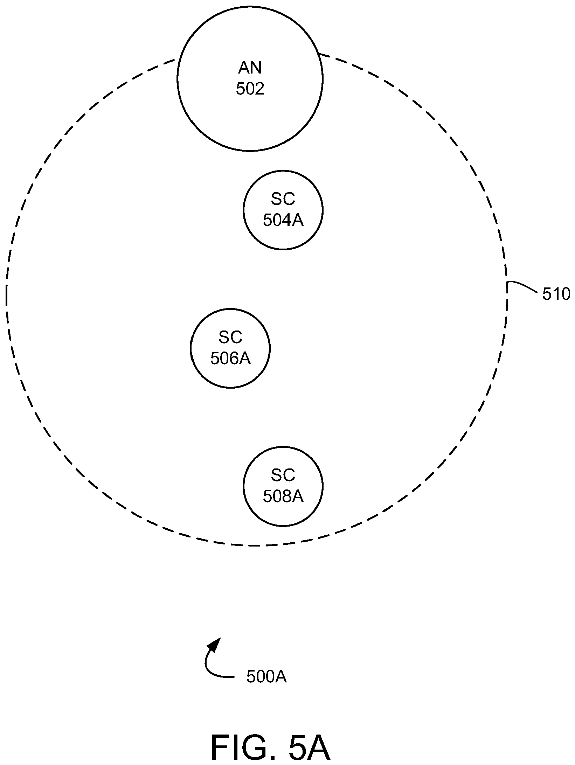

FIGS. 5A-5C illustrate exemplary communication systems 500A-500C for scheduling transmissions from an access node. Systems 500A-500C comprise access node 502, small cells 504A, 506A, 508A, 504B, 506B, 508B, 504C, 506C, and 508C, and signal area 510. Access node 502 may comprise an access node similar to access node 406 and small cells 504A, 506A, 508A, 504B, 506B, 508B, 504C, 506C, and 508C may comprise a small cell similar to small cell 408. In an embodiment, systems 500A-500C may depict various network configurations for small cells (e.g., based on small cell locations).

In operation, access node 502 may establish communication with one or more wireless devices such that access node 502 provides the wireless devices access to a communication network (e.g., communication network 414). Similarly, small cells 504A, 506A, 508A, 504B, 506B, 508B, 504C, 506C, and 508C may establish communication with one or more wireless devices such that the small cells provide the wireless devices access to a communication network (e.g., communication network 414).

In an embodiment, access node 502 may comprise a macro cell and small cells 504A, 506A, 508A, 504B, 506B, 508B, 504C, 506C, and 508C may comprise a small cell (e.g., femto cell, pico cell, micro cell, or the like). For instance, the signal area for the macro cell may be larger than the signal area for the small cell. In an embodiment, one or more of small cells 504A, 506A, 508A, 504B, 506B, 508B, 504C, 506C, and 508C may communicate with access node 502 in order to communicate with a communication network (e.g., communication network 414).

For example, access node 502 may be in communication with a core network such that the core network provides wireless services for wireless devices. The core network may comprise, for example, a controller node (e.g., controller node 410), a gateway node (e.g., gateway node 412), and any other suitable network elements. In an embodiment, one or more of small cells 504A, 506A, 508A, 504B, 506B, 508B, 504C, 506C, and 508C may communicate with the core network using access node 502. For example, small cell 504A may transmit data to access node 502 such that the transmitted data is used to enable one or more wireless devices to access an external network (e.g., the Internet) or to enable the one or more wireless devices to use services provided by the core network (e.g., voice services). In an embodiment, one or more of small cells 504A, 506A, 508A, 504B, 506B, 508B, 504C, 506C, and 508C may directly communicate with the core network (e.g., without access node 502). For example, a backhaul for small cells 504A, 506A, 508A, 504B, 506B, 508B, 504C, 506C, and 508C may connect to the core network and a communication network (e.g., communication network 414), using a wired or wireless communication link (e.g., not via access node 502).

In an embodiment, access node 502 and small cells 504A, 506A, 508A, 504B, 506B, 508B, 504C, 506C, and 508C may communicate (e.g., with one or more wireless device) over the air. For example, a plurality of carriers that comprise bandwidth for wireless communications (e.g., 2.5 GHz carrier, 1900 Mhz carrier, and 800 Mhz carrier, and the like) may include a plurality of channels (e.g., 5 Mhz channels, 10 Mhz channels, 15 Mhz channels, and the like) that may further be divided into subcarriers.

In an embodiment, systems 500A-500C may leverage access node 502 and small cells 504A, 506A, 508A, 504B, 506B, 508B, 504C, 506C, and 508C in order to provide wireless services over signal area 510. In an embodiment, as depicted in system 500C, small cells 504C, 506C, and 508C may be located proximate to the edge of signal area 510. As depicted in system 500B, small cells 504B, 506B, and 508B may be located proximate to access node 502. As depicted in system 500A, small cells 504A, 506A, and 508A may be scattered throughout signal area 510. In some examples, small cells 504A, 506A, 508A, 504B, 506B, 508B, 504C, 506C, and 508C may each comprise a signal area such that the small cells provide wireless services within signal area 510.

Accordingly, wireless communication between access node 502 and wireless devices may be configured based on the locations for the small cells within signal area 510 (e.g., the locations of the small cells). In an embodiment, access node 502 may schedule wireless transmissions from the access node based on the small cell locations, and therefore provide enhanced wireless services over signal area 510. In an embodiment, a communication schedule may be selected for communication between access node 502 and wireless devices, and therefore enhanced wireless services may be provided over signal area 510. For instance, scheduled wireless transmissions and/or a selected communication schedule may consider signal conditions caused by the small cells at their locations or service provided by the small cells at their locations, and thus the wireless services provided over signal area 510 may be tailored to enhance efficiency.

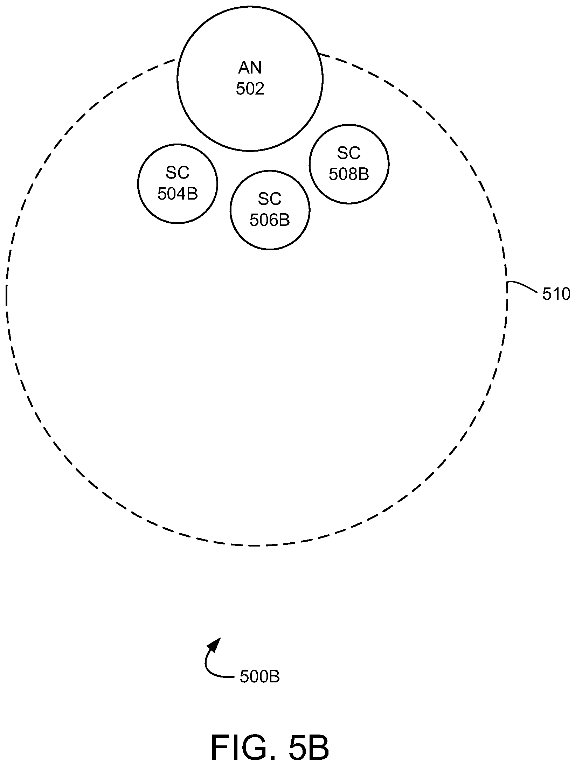

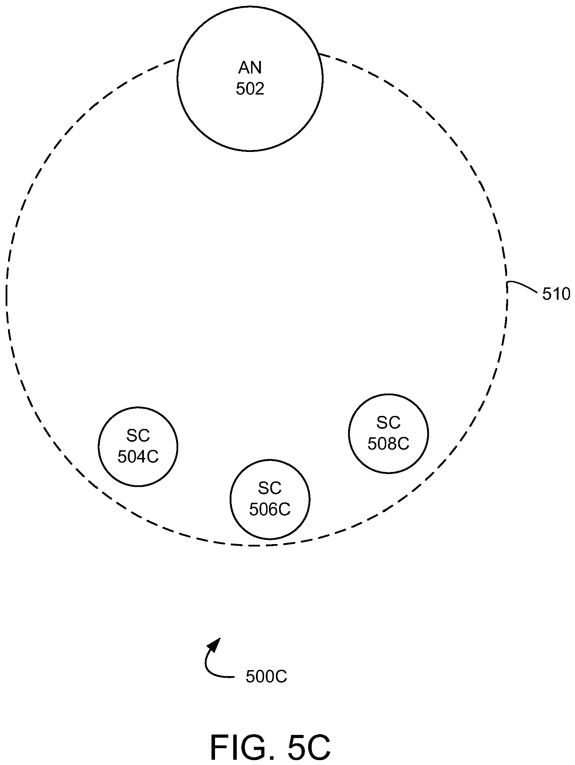

FIG. 6 illustrates an exemplary method to schedule transmissions from an access node. The method will be discussed with reference to the exemplary communication system 500 illustrated in FIG. 5, however, the method can be implemented with any suitable communication system.

Referring to FIG. 6, at step 602, signal areas may be determined for a plurality of small cells. For example, for a configuration as depicted in system 500A, signals areas may be determined for small cells 504A, 506A, and 508A. For a configuration as depicted in system 500B, signals areas may be determined for small cells 504B, 506B, and 508B. For a configuration as depicted in system 500C, signals areas may be determined for small cells 504C, 506C, and 508C. The signal areas may be determined based on accessing a database that stores small cell locations, signal levels detected (e.g., by access node 502 and/or wireless devices) for the small cells within signal area 510, and any other suitable means.

At step 604, locations may be determined for a plurality of small cells. For example, for a configuration as depicted in system 500A, locations may be determined for small cells 504A, 506A, and 508A. For a configuration as depicted in system 500B, locations may be determined for small cells 504B, 506B, and 508B. For a configuration as depicted in system 500C, locations may be determined for small cells 504C, 506C, and 508C. The locations may be determined based on accessing a database that stores small cell locations, signal levels detected (e.g., by access node 502 and/or wireless devices) for the small cells within signal area 510, and any other suitable means. In an embodiment, the database may store locations (e.g., geographic locations) for deployed small cells, and the database may be updated with new and/or changed locations.

In an embodiment, determining the location of the plurality small cells within signal area 510 may comprise determining the wireless channel conditions for wireless devices covered by each small cell at the determined location, wherein the channel conditions comprise channel conditions for communication between the wireless devices and access node 502. For example, for a configuration as depicted in system 500A, a signal area may be determined for small cell 504A. Accordingly, wireless devices within the determined signal area may be covered by small cell 504A. Channel conditions may be determined for the wireless devices covered by small cell 504A, where the channel conditions may be the channel conditions for communication between the covered wireless devices and access node 502.

For example, a wireless device may comprise a channel quality indicator (CQI) relative to communication with an access node. The CQI may indicate the channel quality for communications between the wireless devices and the access node. In an embodiment, the channel conditions determined for wireless devices covered by small cell 504A may comprise, for instance, the CQI for the wireless device when in communication with access node 502. Wireless channel conditions for wireless devices covered by small cells 506A and 508A may be similarly determined. For configurations as depicted in systems 500B and 500C, wireless channel conditions for wireless devices covered by small cells 504B, 506B, 508B, 504C, 506C, and 508C may be similarly determined. In an embodiment, the CQIs for wireless devices covered by small cells 504B, 506B, and 508B may meet a high CQI threshold while the CQIs for wireless devices covered by small cells 504C, 506C, and 508C may meet a low CQI threshold. The CQIs for wireless devices covered by small cells 504A, 506A, and 508A may comprise a mix of CQIs that meet the high CQI threshold, the low CQI threshold, or neither threshold.

In an embodiment, determining the location of the plurality small cells within signal area 510 may comprise determining a region for each small cell that indicates channel conditions for wireless devices within the determined signal area for each small cell, wherein the channel conditions comprise channel conditions for communication between the wireless devices and access node 502. For example, for a configuration as depicted in system 500A, a signal area may be determined for small cell 504A. Based on the signal area, a region may be determined for small cell 504A. For example signal area 510 may comprise a plurality of regions. The regions may indicate the channel conditions for wireless devices covered by small cells within that region. For example, small cells 504B, 506B, and 508B may be located within a region that comprises a high CQI threshold while small cells 504C, 506C, and 508C may be located within a region that comprises a low CQI threshold. Small cells 504A, 506A, and 508A may be located within a mix of regions that comprise a mix of CQI thresholds.

At step 606, a utilization may be determined for the small cells. In an embodiment, for a configuration as depicted in system 500A, a utilization may be determined for small cells 504A, 506A, and 508A. For example, small cell 504A may communicate with wireless devices and a utilization of small cell 504A may be determined. For example, the utilization may comprise a number of connections with wireless devices (e.g., a number of RRC connections), a throughput for the small cell, a processor load for the small cell, a percentage of resources used (e.g., wireless spectrum resources and/or hardware resources), and the like. The utilization for small cells 506A and 508A may be similarly determined. For configurations as depicted in systems 500B and 500C, the utilizations for small cells 504B, 506B, 508B, 504C, 506C, and 508C may be similarly determined.

At step 608, a scheduling algorithm may be selected for the access node based on the determined locations for the small cells. For example, for a configuration as depicted in system 500A, based on the determined locations for small cells 504A, 506A and 508A, a scheduling algorithm may be selected for access node 502. The scheduling algorithm may comprise one of a low proportional fairness scheduling algorithm, a medium proportional fairness scheduling algorithm, and a high proportional fairness scheduling algorithm. While three types of proportional fairness scheduling algorithms are described, other scheduling algorithms may be used that comprise equal rate proportional fair scheduling, Maximum C/I scheduling, QoS Based scheduling, frequency based scheduling and the like.

In an embodiment, the proportional fairness of a scheduling algorithm may be based on how well the algorithm distributes resources (e.g., wireless resources) to wireless devices communicating with an access node. Where each of the wireless devices is given an equal amount of resources, the algorithm may be a proportionally fair algorithm. Accordingly, a high proportional fairness scheduling algorithm may attempt to distribute wireless resources to wireless devices with a high proportional fairness.

In some circumstances, it may be beneficial to distribute resources unevenly. For example, where wireless devices have varying channel quality values (e.g., CQIs), it may be beneficial to distribute more wireless resources to the wireless devices that comprise a high channel quality values because these wireless device can make best use of the resources (e.g., may achieve higher data transmission rates). Accordingly, a low proportional fairness scheduling algorithm may attempt to distribute wireless resources to wireless devices with a low proportional fairness. A medium proportional fairness scheduling algorithm may attempt to distribute wireless resources to wireless devices with a medium proportional fairness. Examples of data resources that can be distributed comprise any element of spectrum over a period of time and may include physical resource blocks (PRBs), resource elements (REs), resource element groups (REGs), slots, and the like.

In an embodiment, when a number of the plurality of small cells that comprise a location proximate to the edge of the access node signal area meets a threshold criteria, the low proportional fairness scheduling algorithm (or a scheduler that is more weighted towards users in good RF conditions such as a Maximum C/I scheduler) may be selected for access node 502. For example, where a number of small cells (e.g., a percentage of small cells within signal area 510, an absolute number of small cells, or any other suitable number) with a location proximate to the edge of signal area 510 meets a threshold criteria (e.g., threshold percentage, threshold number of small cells, and the like), the low proportional fairness scheduling algorithm may be selected for access node 502. For example, for a configuration as depicted in system 500C, small cells 504C, 506C, and 508C may comprise locations proximate to the edge of signal area 510. Accordingly, the number of small cells that comprise a location proximate to the edge of signal area 510 may meet a threshold criteria, and the low proportional fairness scheduling algorithm may be selected for access node 502. For configurations as depicted in systems 500A and 500B, the number of small cells that comprise a location proximate to the edge of signal area 510 for each configuration may not meet the threshold criteria.

In an embodiment, when a number of the plurality of small cells that comprise a location within a region that comprises a low CQI threshold meets a threshold criteria, the low proportional fairness scheduling algorithm (or a scheduler that is more weighted towards users in good RF conditions such as a Maximum C/I scheduler) may be selected for access node 502. For example, where a number of small cells (e.g., a percentage of small cells within signal area 510, an absolute number of small cells, or any other suitable number) with a location within a region that comprises a low CQI threshold meets a threshold criteria (e.g., threshold percentage, threshold number of small cells, and the like), the low proportional fairness scheduling algorithm may be selected for access node 502. For example, for a configuration as depicted in system 500C, small cells 504C, 506C and 508C may comprise locations within a region that comprises a low CQI threshold. Accordingly, the number of small cells within a region that comprises a low CQI threshold may meet a threshold criteria, and the low proportional fairness scheduling algorithm may be selected for access node 502. For configurations as depicted in systems 500A and 500B, the number of small cells within a region that comprises a low CQI threshold for each configuration may not meet the threshold criteria.

In an embodiment, when a number of the plurality of small cells that comprise a location proximate to access node 502 meets a threshold criteria, the high proportional fairness scheduling algorithm (or a scheduler that is more weighted towards users in poor RF conditions to preserve cell-edge throughput such as equal rate scheduler) may be selected for access node 502. For example, where a number of small cells (e.g., a percentage of small cells within signal area 510, an absolute number of small cells, or any other suitable number) with a location proximate to access node 502 meets a threshold criteria (e.g., threshold percentage, threshold number of small cells, and the like), the high proportional fairness scheduling algorithm may be selected for access node 502. For example, for a configuration as depicted in system 500B, small cells 504B, 506B and 508B may comprise locations proximate to access node 502. Accordingly, the number of small cells that comprise a location proximate to access node 502 may meet a threshold criteria, and the high proportional fairness scheduling algorithm may be selected for access node 502. For configurations as depicted in systems 500A and 500C, the number of small cells that comprise a location proximate to access node 502 for each configuration may not meet the threshold criteria.

In an embodiment, when a number of the plurality of small cells that comprise a location within a region that comprises a high CQI threshold meets a threshold criteria, the high proportional fairness scheduling algorithm (or a scheduler that is more weighted towards users in poor RF conditions to preserve cell-edge throughput such as equal rate scheduler) may be selected for access node 502. For example, where a number of small cells (e.g., a percentage of small cells within signal area 510, an absolute number of small cells, or any other suitable number) with a location within a region that comprises a high CQI threshold meets a threshold criteria (e.g., threshold percentage, threshold number of small cells, and the like), the high proportional fairness scheduling algorithm may be selected for access node 502. For example, for a configuration as depicted in system 500B, small cells 504B, 506B and 508B may comprise locations within a region that comprises a high CQI threshold. Accordingly, the number of small cells within a region that comprises a high CQI threshold may meet a threshold criteria, and the high proportional fairness scheduling algorithm may be selected for access node 502. For configurations as depicted in systems 500A and 500B, the number of small cells within a region that comprises a high CQI threshold for each configuration may not meet the threshold criteria.

In an embodiment, when a number of the plurality of small cells that comprise a location proximate to access node 502 does not meet a threshold criteria and a number of the plurality of small cells that comprise a location proximate to an edge of signal area 510 does not meet a threshold criteria, the medium proportional fairness scheduling algorithm (or any scheduler that balances users' needs throughout the cell) may be selected for access node 502. For example, where a number of small cells (e.g., a percentage of small cells within signal area 510, an absolute number of small cells, or any other suitable number) with a location proximate to access node 502 does not meet a threshold criteria (e.g., threshold percentage, threshold number of small cells, and the like) and where a number of small cells with a location proximate to an edge of signal area 510 does not meet a threshold criteria, the medium proportional fairness scheduling algorithm may be selected for access node 502. For example, for a configuration as depicted in system 500A, small cell 504A may comprise a location proximate to access node 502, small cell 508A may comprise a location proximate to an edge of signal area 510, and small cell 506A may comprise a location proximate to neither access node 502 nor an edge of signal area 510. Accordingly, the number of small cells that comprise a location proximate to access node 502 may not meet a threshold criteria and the number of small cells that comprise a location proximate to an edge of signal area 510 may not meet a threshold criteria, and the medium proportional fairness scheduling algorithm may be selected for access node 502.

In an embodiment, when a number of the plurality of small cells that comprise a location within a region that comprises a high CQI threshold does not meet a threshold criteria and a number of the plurality of small cells that comprise a location within a region that comprises a low CQI threshold does not meet a threshold criteria, the medium proportional fairness scheduling algorithm (or any scheduler that balances users' needs throughout the cell) may be selected for access node 502. For example, where a number of small cells (e.g., a percentage of small cells within signal area 510, an absolute number of small cells, or any other suitable number) with a location within a region that comprises a high CQI threshold does not meet a threshold criteria (e.g., threshold percentage, threshold number of small cells, and the like) and a number of small cells with a location within a region that comprises a low CQI threshold does not meet a threshold criteria, the medium proportional fairness scheduling algorithm may be selected for access node 502. For example, for a configuration as depicted in system 500A, small cell 504A may comprise a location within a region that comprises a high CQI threshold, small cell 508A may comprise a location within a region that comprises a low CQI threshold, and small cell 506A may comprise a location within a region that comprises neither a high CQI threshold nor a low CQI threshold. Accordingly, the number of small cells that comprise a location within a region that comprises a high CQI threshold may not meet a threshold criteria and the number small cells that comprise a location within a region that comprises a low CQI threshold may not meet a threshold criteria, and the medium proportional fairness scheduling algorithm may be selected for access node 502.

In an embodiment, when a number of the plurality of small cells that comprise a location proximate to access node 502 meets a threshold criteria and a number of the plurality of small cells that comprise a location proximate to an edge of signal area 510 meets a threshold criteria, the medium proportional fairness scheduling algorithm (or any scheduler that balances users' needs throughout the cell) may be selected for access node 502. For example, where a number of small cells (e.g., a percentage of small cells within signal area 510, an absolute number small cells, or any other suitable number) with a location proximate to access node 502 meets a threshold criteria (e.g., threshold percentage, threshold number of small cells, and the like) and where a number of small cells with a location proximate to an edge of signal area 510 meets a threshold criteria, the medium proportional fairness scheduling algorithm may be selected for access node 502.

In an embodiment, when a number of the plurality of small cells that comprise a location within a region that comprises a high CQI threshold meets a threshold criteria and a number of the plurality of small cells that comprise a location within a region that comprises a low CQI threshold meets a threshold criteria, the medium proportional fairness scheduling algorithm (or any scheduler that balances users' needs throughout the cell) may be selected for access node 502. For example, where a number of small cells (e.g., a percentage of small cells within signal area 510, an absolute number of small cells, or any other suitable number) with a location within a region that comprises a high CQI threshold meets a threshold criteria (e.g., threshold percentage, threshold number of small cells, and the like) and a number of small cells with a location within a region that comprises a low CQI meets a threshold criteria, the medium proportional fairness scheduling algorithm may be selected for access node 502.

In an embodiment, when a number of the plurality of small cells that comprise a location proximate to the edge of the access node signal area meets a threshold criteria and a utilization for the plurality of small cells that comprise a location proximate to the edge of the access node signal area meets a utilization criteria, the low proportional fairness scheduling algorithm (or a scheduler that is more weighted towards users in good RF conditions such as a Maximum C/I scheduler) may be selected for access node 502. For example, where a number of small cells (e.g., a percentage of small cells within signal area 510, an absolute number of small cells, or any other suitable number) with a location proximate to the edge of signal area 510 meets a threshold criteria (e.g., threshold percentage, threshold number of small cells, and the like) and a utilization for the small cells that comprise a location proximate to the edge of the access node signal area meets a utilization criteria (e.g. processor usage above a threshold, a threshold number of RRC connections, and the like), the low proportional fairness scheduling algorithm may be selected for access node 502. For example, for a configuration as depicted in system 500C, small cells 504C, 506C and 508C may comprise locations proximate to the edge of signal area 510. Accordingly, the number of small cells that comprise a location proximate to the edge of signal area 510 may meet a threshold criteria. Where the utilization for small cells 504C, 506C, and 508C also meets a utilization criteria, the low proportional fairness scheduling algorithm may be selected for access node 502. For configurations as depicted in systems 500A and 500B, the number of small cells that comprise a location proximate to the edge of signal area 510 for each configuration may not meet the threshold criteria.

In an embodiment, when a number of the plurality of small cells that comprise a location within a region that comprises a low CQI threshold meets a threshold criteria and a utilization for the plurality of small cells that comprise a location within a region that comprises a low CQI threshold meets a utilization criteria, the low proportional fairness scheduling algorithm (or a scheduler that is more weighted towards users in good RF conditions such as a Maximum C/I scheduler) may be selected for access node 502. For example, where a number of small cells (e.g., a percentage of small cells within signal area 510, an absolute number of small cells, or any other suitable number) with a location within a region that comprises a low CQI threshold meets a threshold criteria (e.g., threshold percentage, threshold number of small cells, and the like) and a utilization for the small cells that comprise a location within a region that comprises a low CQI threshold meets a utilization criteria (e.g. processor usage above a threshold, a threshold number of RRC connections, and the like), the low proportional fairness scheduling algorithm may be selected for access node 502. For example, for a configuration as depicted in system 500C, small cells 504C, 506C and 508C may comprise locations within a region that comprises a low CQI threshold. Accordingly, the number of small cells within a region that comprises a low CQI threshold may meet a threshold criteria. Where the utilization for small cells 504C, 506C, and 508C also meets a utilization criteria, the low proportional fairness scheduling algorithm may be selected for access node 502. For configurations as depicted in systems 500A and 500B, the number of small cells within a region that comprises a low CQI threshold for each configuration may not meet the threshold criteria.

In an embodiment, when a number of the plurality of small cells that comprise a location proximate to the access node meets a threshold criteria and a utilization for the plurality of small cells that comprise a location proximate to the access node meets a utilization criteria, the high proportional fairness scheduling algorithm (or a scheduler that is more weighted towards users in poor RF conditions to preserve cell-edge throughput such as equal rate scheduler) may be selected for access node 502. For example, where a number of small cells (e.g., a percentage of small cells within signal area 510, an absolute number of small cells, or any other suitable number) with a location proximate to access node 502 meets a threshold criteria (e.g., threshold percentage, threshold number of small cells, and the like) and a utilization for the small cells that comprise a location proximate to access node 502 meets a utilization criteria (e.g. processor usage above a threshold, a threshold number of RRC connections, and the like), the high proportional fairness scheduling algorithm may be selected for access node 502. For example, for a configuration as depicted in system 500B, small cells 504B, 506B and 508B may comprise locations proximate to access node 502. Accordingly, the number of small cells that comprise a location proximate to access node 502 may meet a threshold criteria. Where the utilization for small cells 504B, 506B, and 508B also meets a utilization criteria, the high proportional fairness scheduling algorithm may be selected for access node 502. For configurations as depicted in systems 500A and 500C, the number of small cells that comprise a location proximate to the edge of signal area 510 for each configuration may not meet the threshold criteria.

In an embodiment, when a number of the plurality of small cells that comprise a location within a region that comprises a high CQI threshold meets a threshold criteria and a utilization for the plurality of small cells that comprise a location within a region that comprises a high CQI threshold meets a utilization criteria, the high proportional fairness scheduling algorithm (or a scheduler that is more weighted towards users in poor RF conditions to preserve cell-edge throughput such as equal rate scheduler) may be selected for access node 502. For example, where a number of small cells (e.g., a percentage of small cells within signal area 510, an absolute number of small cells, or any other suitable number) with a location within a region that comprises a high CQI threshold meets a threshold criteria (e.g., threshold percentage, threshold number of small cells, and the like) and a utilization for the small cells that comprise a location within a region that comprises a high CQI threshold meets a utilization criteria (e.g. processor usage above a threshold, a threshold number of RRC connections, and the like), the high proportional fairness scheduling algorithm may be selected for access node 502. For example, for a configuration as depicted in system 500B, small cells 504B, 506B and 508B may comprise locations within a region that comprises a high CQI threshold. Accordingly, the number of small cells within a region that comprises a high CQI threshold may meet a threshold criteria. Where the utilization for small cells 504B, 506B, and 508B also meets a utilization criteria, the high proportional fairness scheduling algorithm may be selected for access node 502. For configurations as depicted in systems 500A and 500B, the number of small cells within a region that comprises a high CQI threshold for each configuration may not meet the threshold criteria.

At step 610, data may be transmitted from the access node to a plurality of wireless devices based on the selected scheduling algorithm. For example, access node 502 may transmit data to a plurality of wireless devices using the selected scheduling algorithm.

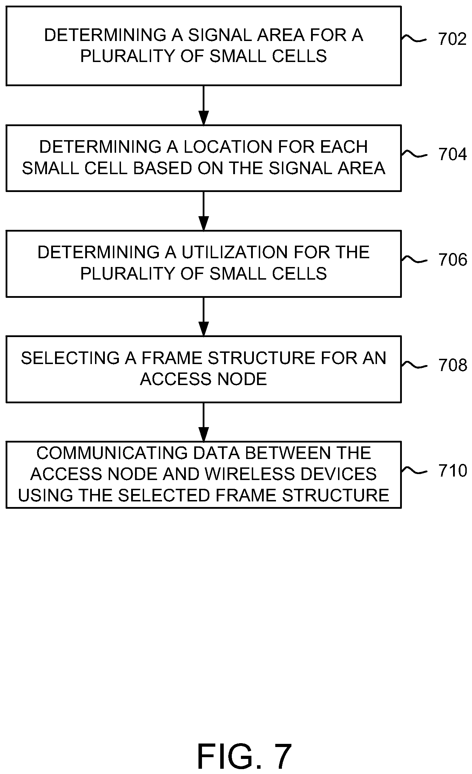

In another embodiment, a communication schedule may be selected for communication between an access node and wireless devices. FIG. 7 illustrates an exemplary method to schedule transmissions between an access node and wireless devices. The method will be discussed with reference to the exemplary communication system 500 illustrated in FIG. 5, however, the method can be implemented with any suitable communication system.

Referring to FIG. 7, at step 702, signal areas may be determined for a plurality of small cells. For example, for a configuration as depicted in system 500A, signals areas may be determined for small cells 504A, 506A, and 508A. For a configuration as depicted in system 500B, signals areas may be determined for small cells 504B, 506B, and 508B. For a configuration as depicted in system 500C, signals areas may be determined for small cells 504C, 506C, and 508C. The signal areas may be determined based on accessing a database that stores small cell locations, signal levels detected (e.g., by access node 502 and/or wireless devices) for the small cells within signal area 510, and any other suitable means.

At step 704, locations may be determined for a plurality of small cells. For example, for a configuration as depicted in system 500A, locations may be determined for small cells 504A, 506A, and 508A. For a configuration as depicted in system 500B, locations may be determined for small cells 504B, 506B, and 508B. For a configuration as depicted in system 500C, locations may be determined for small cells 504C, 506C, and 508C. The locations may be determined based on accessing a database that stores small cell locations, signal levels detected (e.g., by access node 502 and/or wireless devices) for the small cells within signal area 510, and any other suitable means. In an embodiment, the database may store locations (e.g., geographic locations) for deployed small cells, and the database may be updated with new and/or changed locations.

In an embodiment, determining the location of the plurality small cells within signal area 510 may comprise determining the wireless channel conditions for wireless devices covered by each small cell at the determined location, wherein the channel conditions comprise channel conditions for communication between the wireless devices and access node 502. For example, for a configuration as depicted in system 500A, a signal area may be determined for small cell 504A. Accordingly, wireless devices within the determined signal area may be covered by small cell 504A. Channel conditions may be determined for the wireless devices covered by small cell 504A, where the channel conditions may be the channel conditions for communication between the covered wireless devices and access node 502.

For example, a wireless device may comprise a channel quality indicator (CQI) relative to communication with an access node. The CQI may indicate the channel quality for communications between the wireless devices and the access node. In an embodiment, the channel conditions determined for wireless devices covered by small cell 504A may comprise, for instance, the CQI for the wireless device when in communication with access node 502. Wireless channel conditions for wireless devices covered by small cells 506A and 508A may be similarly determined. For configurations as depicted in systems 500B and 500C, wireless channel conditions for wireless devices covered by small cells 504B, 506B, 508B, 504C, 506C, and 508C may be similarly determined. In an embodiment, the CQIs for wireless devices covered by small cells 504B, 506B, and 508B may meet a high CQI threshold while the CQIs for wireless devices covered by small cells 504C, 506C, and 508C may meet a low CQI threshold. The CQIs for wireless devices covered by small cells 504A, 506A, and 508A may comprise a mix of CQIs that meet the high CQI threshold, the low CQI threshold, or neither threshold.

In an embodiment, determining the location of the plurality small cells within signal area 510 may comprise determining a region for each small cell that indicates channel conditions for wireless devices within the determined signal area for each small cell, wherein the channel conditions comprise channel conditions for communication between the wireless devices and access node 502. For example, for a configuration as depicted in system 500A, a signal area may be determined for small cell 504A. Based on the signal area, a region may be determined for small cell 504A. For example signal area 510 may comprise a plurality of regions. The regions may indicate the channel conditions for wireless devices covered by small cells within that region. For example, small cells 504B, 506B, and 508B may be located within a region that comprises a high CQI threshold while small cells 504C, 506C, and 508C may be located within a region that comprises a low CQI threshold. Small cells 504A, 506A, and 508A may be located within a mix of regions that comprise a mix of CQI thresholds.

At step 706, a utilization may be determined for the small cells. In an embodiment, for a configuration as depicted in system 500A, a utilization may be determined for small cells 504A, 506A, and 508A. For example, small cell 504A may communicate with wireless devices and a utilization of small cell 504A may be determined. For example, the utilization may comprise a number of connections with wireless devices (e.g., a number of RRC connections), a throughput for the small cell, a processor load for the small cell, a percentage of resources used (e.g., wireless spectrum resources and/or hardware resources), and the like. The utilization for small cells 506A and 508A may be similarly determined. For configurations as depicted in systems 500B and 500C, the utilizations for small cells 504B, 506B, 508B, 504C, 506C, and 508C may be similarly determined.

At step 708, frame structure may be selected for the access node based on the determined locations for the small cells. For example, based on the determined locations for small cells 504A, 506A and 508A, a frame structure may be selected for access node 502. The frame structure may comprise uplink frames, downlink, frames, or various combinations of these.

For example, in a time division duplex (TDD) system, a frame may comprise a number of subframes (e.g. Transmission Time Intervals, TTIs) that include a mix of uplink subframes and downlink subframes. In some embodiments, a special subframe may also be used, for instance, as a guard between an uplink subframe and a downlink subframe or for any other suitable purpose. When using a TDD structure, an uplink subframe and a downlink subframe may be transmitted over the same frequency but at different times. In an embodiment, a frame structure may comprise uplink subframes and/or downlink subframes, where each frame structure may comprise a different mix of subframes. For example, a first frame structure may comprise 10 subframes, where the order of subframes may comprise downlink, special, uplink, uplink, downlink, downlink, special, uplink, uplink, and downlink. A second frame structure may comprise 10 subframes, where the order of subframes may comprise downlink, special, uplink, uplink, downlink, downlink, downlink, downlink, downlink, and downlink. Other frame structures may comprise various other mixes of special, downlink, and uplink subframe configurations.

In an embodiment, when a number of the plurality of small cells that comprise a location proximate to the edge of the access node signal area meets a threshold criteria, a frame structure that meets a downlink criteria may be selected for access node 502. For example, where a number of small cells (e.g., a percentage of small cells within signal area 510, an absolute number of small cells, or any other suitable number) with a location proximate to the edge of signal area 510 meets a threshold criteria (e.g., threshold percentage, threshold number of small cells, and the like), a frame structure that meets a downlink criteria may be selected for access node 502. In an embodiment, a downlink criteria may comprise a frame structure with a minimum number of downlink subframes (e.g., minimum absolute number or minimum percentage of the frame). For example, a frame structure that meets a downlink criteria may comprise at least a threshold number of subframes that comprise downlink subframes (e.g., 5 subframes, 6 subframes, 7 subframes, at least 50% of subframes, at least 60% of subframes, at least 70% of subframes, and the like).

In an embodiment, for a configuration as depicted in system 500C, small cells 504C, 506C, and 508C may comprise locations proximate to the edge of signal area 510. Accordingly, the number of small cells that comprise a location proximate to the edge of signal area 510 may meet a threshold criteria, and a frame structure that meets a downlink criteria may be selected for access node 502. For configurations as depicted in systems 500A and 500B, the number of small cells that comprise a location proximate to the edge of signal area 510 for each configuration may not meet the threshold criteria.

In an embodiment, when a number of the plurality of small cells that comprise a location within a region that comprises a low CQI threshold meets a threshold criteria, a frame structure that meets a downlink criteria may be selected for access node 502. For example, where a number of small cells (e.g., a percentage of small cells within signal area 510, an absolute number of small cells, or any other suitable number) with a location within a region that comprises a low CQI threshold meets a threshold criteria (e.g., threshold percentage, threshold number of small cells, and the like), a frame structure that meets a downlink criteria may be selected for access node 502. For example, for a configuration as depicted in system 500C, small cells 504C, 506C and 508C may comprise locations within a region that comprises a low CQI threshold. Accordingly, the number of small cells within a region that comprises a low CQI threshold may meet a threshold criteria, and a frame structure that meets a downlink criteria may be selected for access node 502. For configurations as depicted in systems 500A and 500B, the number of small cells within a region that comprises a low CQI threshold for each configuration may not meet the threshold criteria.

In an embodiment, when a number of the plurality of small cells that comprise a location proximate to access node 502 meets a threshold criteria, a frame structure that meets an uplink criteria may be selected for access node 502. For example, where a number of small cells (e.g., a percentage of small cells within signal area 510, an absolute number of small cells, or any other suitable number) with a location proximate to access node 502 meets a threshold criteria (e.g., threshold percentage, threshold number of small cells, and the like), a frame structure that meets an uplink criteria may be selected for access node 502. In an embodiment, an uplink criteria may comprise a frame structure with a minimum number of uplink subframes (e.g., minimum absolute number or minimum percentage of the frame). For example, a frame structure that meets an uplink criteria may comprise at least a threshold number of subframes that comprise uplink subframes (e.g., 3 subframes, 4 subframes, 5 subframes, at least 30% of subframes, at least 40% of subframes, at least 50% of subframes, and the like).

In an embodiment, for a configuration as depicted in system 500B, small cells 504B, 506B and 508B may comprise locations proximate to access node 502. Accordingly, the number of small cells that comprise a location proximate to access node 502 may meet a threshold criteria, and a frame structure that meets a uplink criteria may be selected for access node 502. For configurations as depicted in systems 500A and 500C, the number of small cells that comprise a location proximate to access node 502 for each configuration may not meet the threshold criteria.

In an embodiment, when a number of the plurality of small cells that comprise a location within a region that comprises a high CQI threshold meets a threshold criteria, a frame structure that meets a uplink criteria may be selected for access node 502. For example, where a number of small cells (e.g., a percentage of small cells within signal area 510, an absolute number of small cells, or any other suitable number) with a location within a region that comprises a high CQI threshold meets a threshold criteria (e.g., threshold percentage, threshold number of small cells, and the like), a frame structure that meets a uplink criteria may be selected for access node 502. For example, for a configuration as depicted in system 500B, small cells 504B, 506B and 508B may comprise locations within a region that comprises a high CQI threshold. Accordingly, the number of small cells within a region that comprises a high CQI threshold may meet a threshold criteria, and a frame structure that meets a uplink criteria may be selected for access node 502. For configurations as depicted in systems 500A and 500B, the number of small cells within a region that comprises a high CQI threshold for each configuration may not meet the threshold criteria.

In an embodiment, when a number of the plurality of small cells that comprise a location proximate to the edge of the access node signal area meets a threshold criteria and a utilization for the plurality of small cells that comprise a location proximate to the edge of the access node signal area meets a utilization criteria, a frame structure that meets a downlink criteria may be selected for access node 502. For example, where a number of small cells (e.g., a percentage of small cells within signal area 510, an absolute number of small cells, or any other suitable number) with a location proximate to the edge of signal area 510 meets a threshold criteria (e.g., threshold percentage, threshold number of small cells, and the like) and a utilization for the small cells that comprise a location proximate to the edge of the access node signal area meets a utilization criteria (e.g. processor usage above a threshold, a threshold number of RRC connections, and the like), a frame structure that meets a downlink criteria may be selected for access node 502. For example, for a configuration as depicted in system 500C, small cells 504C, 506C and 508C may comprise locations proximate to the edge of signal area 510. Accordingly, the number of small cells that comprise a location proximate to the edge of signal area 510 may meet a threshold criteria. Where the utilization for small cells 504C, 506C, and 508C also meets a utilization criteria, a frame structure that meets a downlink criteria may be selected for access node 502. For configurations as depicted in systems 500A and 500B, the number of small cells that comprise a location proximate to the edge of signal area 510 for each configuration may not meet the threshold criteria.

In an embodiment, when a number of the plurality of small cells that comprise a location within a region that comprises a low CQI threshold meets a threshold criteria and a utilization for the plurality of small cells that comprise a location within a region that comprises a low CQI threshold meets a utilization criteria, a frame structure that meets a downlink criteria may be selected for access node 502. For example, where a number of small cells (e.g., a percentage of small cells within signal area 510, an absolute number of small cells, or any other suitable number) with a location within a region that comprises a low CQI threshold meets a threshold criteria (e.g., threshold percentage, threshold number of small cells, and the like) and a utilization for the small cells that comprise a location within a region that comprises a low CQI threshold meets a utilization criteria (e.g. processor usage above a threshold, a threshold number of RRC connections, and the like), a frame structure that meets a downlink criteria may be selected for access node 502. For example, for a configuration as depicted in system 500C, small cells 504C, 506C and 508C may comprise locations within a region that comprises a low CQI threshold. Accordingly, the number of small cells within a region that comprises a low CQI threshold may meet a threshold criteria. Where the utilization for small cells 504C, 506C, and 508C also meets a utilization criteria, a frame structure that meets a downlink criteria may be selected for access node 502. For configurations as depicted in systems 500A and 500B, the number of small cells within a region that comprises a low CQI threshold for each configuration may not meet the threshold criteria.

In an embodiment, when a number of the plurality of small cells that comprise a location proximate to the access node meets a threshold criteria and a utilization for the plurality of small cells that comprise a location proximate to the access node meets a utilization criteria, a frame structure that meets an uplink criteria may be selected for access node 502. For example, where a number of small cells (e.g., a percentage of small cells within signal area 510, an absolute number of small cells, or any other suitable number) with a location proximate to access node 502 meets a threshold criteria (e.g., threshold percentage, threshold number of small cells, and the like) and a utilization for the small cells that comprise a location proximate to access node 502 meets a utilization criteria (e.g. processor usage above a threshold, a threshold number of RRC connections, and the like), a frame structure that meets an uplink criteria may be selected for access node 502. For example, for a configuration as depicted in system 500B, small cells 504B, 506B and 508B may comprise locations proximate to access node 502. Accordingly, the number of small cells that comprise a location proximate to access node 502 may meet a threshold criteria. Where the utilization for small cells 504B, 506B, and 508B also meets a utilization criteria, a frame structure that meets an uplink criteria may be selected for access node 502. For configurations as depicted in systems 500A and 500C, the number of small cells that comprise a location proximate to the edge of signal area 510 for each configuration may not meet the threshold criteria.

In an embodiment, when a number of the plurality of small cells that comprise a location within a region that comprises a high CQI threshold meets a threshold criteria and a utilization for the plurality of small cells that comprise a location within a region that comprises a high CQI threshold meets a utilization criteria, a frame structure that meets an uplink criteria may be selected for access node 502. For example, where a number of small cells (e.g., a percentage of small cells within signal area 510, an absolute number of small cells, or any other suitable number) with a location within a region that comprises a high CQI threshold meets a threshold criteria (e.g., threshold percentage, threshold number of small cells, and the like) and a utilization for the small cells that comprise a location within a region that comprises a high CQI threshold meets a utilization criteria (e.g. processor usage above a threshold, a threshold number of RRC connections, and the like), a frame structure that meets an uplink criteria may be selected for access node 502. For example, for a configuration as depicted in system 500B, small cells 504B, 506B and 508B may comprise locations within a region that comprises a high CQI threshold. Accordingly, the number of small cells within a region that comprises a high CQI threshold may meet a threshold criteria. Where the utilization for small cells 504B, 506B, and 508B also meets a utilization criteria, a frame structure that meets an uplink criteria may be selected for access node 502. For configurations as depicted in systems 500A and 500B, the number of small cells within a region that comprises a high CQI threshold for each configuration may not meet the threshold criteria.

In an embodiment, the selected frame structure may be used for communication between the access node and wireless devices and for communication between the small cells and wireless devices. For example, the selected frame structure may be used for communication between access node 502 and wireless devices and for communication between small cells 504B, 506B, and 508B and wireless devices. In another example, a first frame structure may be used for communication between access node 502 and wireless devices and a second frame structure may be used for communication between small cells 504B, 506B, and 508B and wireless devices.

In an embodiment, when a number of the plurality of small cells that comprise a location proximate to the edge of the access node signal area meets a threshold criteria, a frame structure that meets a downlink criteria may be selected for access node 502 and a frame structure that meets an uplink criteria may be selected for the small cells that comprise a location proximate to the edge of the access node signal area. For example, where a number of small cells (e.g., a percentage of small cells within signal area 510, an absolute number of small cells, or any other suitable number) with a location proximate to the edge of signal area 510 meets a threshold criteria (e.g., threshold percentage, threshold number of small cells, and the like), a frame structure that meets a downlink criteria may be selected for access node 502 and a frame structure that meets an uplink criteria may be selected for the small cells with a location proximate to the edge of signal area 510. In an embodiment, for a configuration as depicted in system 500C, small cells 504C, 506C, and 508C may comprise locations proximate to the edge of signal area 510. Accordingly, the number of small cells that comprise a location proximate to the edge of signal area 510 may meet a threshold criteria. A frame structure that meets a downlink criteria may be selected for access node 502 and a frame structure that meets an uplink criteria may be selected for small cells 504C, 506C, and 508C.

In an embodiment, when a number of the plurality of small cells that comprise a location within a region that comprises a low CQI threshold meets a threshold criteria, a frame structure that meets a downlink criteria may be selected for access node 502 and a frame structure that meets an uplink criteria may be selected for the small cells that comprise a location within a region that comprises a low CQI threshold. For example, where a number of small cells (e.g., a percentage of small cells within signal area 510, an absolute number of small cells, or any other suitable number) with a location within a region that comprises a low CQI threshold meets a threshold criteria (e.g., threshold percentage, threshold number of small cells, and the like), a frame structure that meets a downlink criteria may be selected for access node 502 and a frame structure that meets an uplink criteria may be selected for the small cells that comprise a location within a region that comprises a low CQI threshold. For example, for a configuration as depicted in system 500C, small cells 504C, 506C and 508C may comprise locations within a region that comprises a low CQI threshold. Accordingly, the number of small cells within a region that comprises a low CQI threshold may meet a threshold criteria. A frame structure that meets a downlink criteria may be selected for access node 502 and a frame structure that meets an uplink criteria may be selected for small cells 504C, 506C, and 508C.

In an embodiment, when a number of the plurality of small cells that comprise a location proximate to access node 502 meets a threshold criteria, a frame structure that meets a uplink criteria may be selected for access node 502 and a frame structure that meets a downlink criteria may be selected for the small cells that comprise a location proximate to the edge of the access node signal area. For example, where a number of small cells (e.g., a percentage of small cells within signal area 510, an absolute number of small cells, or any other suitable number) with a location proximate to access node 502 meets a threshold criteria (e.g., threshold percentage, threshold number of small cells, and the like), a frame structure that meets a uplink criteria may be selected for access node 502 and a frame structure that meets a downlink criteria may be selected for the small cells that comprise a location proximate to the edge of the access node signal area. In an embodiment, for a configuration as depicted in system 500B, small cells 504B, 506B and 508B may comprise locations proximate to access node 502. Accordingly, the number of small cells that comprise a location proximate to access node 502 may meet a threshold criteria. A frame structure that meets an uplink criteria may be selected for access node 502 and a frame structure that meets a downlink criteria may be selected for small cells 504B, 506B, and 508B.

In an embodiment, when a number of the plurality of small cells that comprise a location within a region that comprises a high CQI threshold meets a threshold criteria, a frame structure that meets a uplink criteria may be selected for access node 502 and a frame structure that meets a downlink criteria may be selected for the small cells that comprise a location within a region that comprises a high CQI threshold. For example, where a number of small cells (e.g., a percentage of small cells within signal area 510, an absolute number of small cells, or any other suitable number) with a location within a region that comprises a high CQI threshold meets a threshold criteria (e.g., threshold percentage, threshold number of small cells, and the like), a frame structure that meets a uplink criteria may be selected for access node 502 and a frame structure that meets a downlink criteria may be selected for the small cells that comprise a location within a region that comprises a high CQI threshold. For example, for a configuration as depicted in system 500B, small cells 504B, 506B and 508B may comprise locations within a region that comprises a high CQI threshold. Accordingly, the number of small cells within a region that comprises a high CQI threshold may meet a threshold criteria. A frame structure that meets an uplink criteria may be selected for access node 502 and a frame structure that meets a downlink criteria may be selected for small cells 504B, 506B, and 508B.

In an embodiment, where the access node communicates with a different frame structure than the small cells, the small cells may implement a blanking scheme. For example, an enhanced inter-cell interference coordination (eICIC) scheme may be implemented such that almost blank subframes (ABS) are used to mitigate against interference between the access nodes and the small cells. For example, a first frame structure may be used for communication between access node 502 and wireless devices and a second frame structure may be used for communication between the small cells and wireless devices. Accordingly, where a conflict between the first frame structure and the second frame structure exists, the small cells may implement an ABS. For example, where the first frame structure indicates a downlink subframe at a particular TTI and the second frame structure indicates an uplink subframe at the particular TTI, the small cells may implement an ABS rather than the uplink subframe.

In an embodiment, a utilization for the access node may be determined, and the small cells may implement a blanking scheme based on the utilization for the access nodes. For example, a utilization for access node 502 may comprise a number of connections with wireless devices (e.g., a number of RRC connections), a throughput for the access node, a processor load for the access node, a percentage of resources used (e.g., wireless spectrum resources and/or hardware resources), and the like. Where the utilization for access node 502 meets a utilization criteria (e.g. processor usage above a threshold, a threshold number of RRC connections, and the like), the small cells may implement a blanking scheme. Where the utilization for access node 502 does not meet the utilization criteria, the small cells may not implement a blanking scheme.

At step 710, data may be transmitted from the access node to a plurality of wireless devices based on the selected scheduling algorithm. For example, access node 502 may transmit data to a plurality of wireless devices using the selected scheduling algorithm. In an embodiment, the communication may comprise communicating data from access node 502 to a wireless device (e.g., downlink communication) using a downlink subframe and communicating data from a wireless device to access node 502 (e.g., uplink communication) using an uplink subframe.

Although the methods described perform steps in a particular order for purposes of illustration, the methods discussed herein are not limited to any particular order or arrangement. One skilled in the art, using the disclosure provided herein, will appreciate that various steps of the methods can be omitted, rearranged, combined, and/or adapted in various ways.

In an embodiment, a method for scheduling transmissions between an access node and wireless devices is provided. A location may be determined for a plurality of small cells within an access node signal area. A frame structure may be selected based on the determined locations for the plurality of small cells, wherein the frame structure is used by the access node to communicate with a plurality of wireless devices. Data may then be communicated between the access node and a plurality of wireless devices based on the selected frame structure.

In an embodiment, determining the location of the plurality small cells within the access node signal area comprises determining the locations relative to the edge of the access node signal area and the location of the access node. In an embodiment, when a number of the plurality of small cells that comprise a location proximate to the edge of the access node signal area meets a threshold criteria, a frame structure that meets a downlink criteria is selected. In an embodiment, when a number of the plurality of small cells that comprise a location proximate to the location of the access node meets a threshold criteria, a frame structure that meets an uplink criteria is selected.

In an embodiment, a utilization is determined for each of the plurality of small cells. In an embodiment, when a number of the plurality of small cells that comprise a location proximate to the edge of the access node signal area meets a threshold criteria and a utilization for the plurality of small cells that comprise a location proximate to the edge of the access node signal area meets a utilization criteria, a frame structure that meets a downlink criteria is selected.

In an embodiment, when a number of the plurality of small cells that comprise a location proximate to the location of the access node meets a threshold criteria and a utilization for the plurality of small cells that comprise a location proximate to the location of the access node meets a utilization criteria, a frame structure that meets an uplink criteria is selected.

In an embodiment, when a number of the plurality of small cells that comprise a location proximate to the edge of the access node signal area meets a threshold criteria, a frame structure that meets a downlink criteria for the access node is selected, and, when the number of the plurality of small cells that comprise a location proximate to the edge of the access node signal area meets a threshold criteria, a frame structure that meets an uplink criteria is selected for the plurality of small cells that comprise a location proximate to the edge of the access node signal area.

In an embodiment, utilization for the access node is determined, and the plurality of small cells that comprise a location proximate to the edge of the access node signal area are instructed to perform frame conflict blanking when the determined utilization for the access node meets a utilization criteria and not to perform frame conflict blanking when the determined utilization for the access nodes does not meet the utilization criteria.

In an embodiment, the plurality of small cells communicate with a plurality of wireless devices using the selected frame structure. In an embodiment, determining the location of the plurality small cells within the access node signal area comprises determining the wireless channel conditions for wireless devices covered by each small cell at the determined location, wherein the channel conditions comprise channel conditions for communication between the wireless devices and the access node.

In an embodiment, determining the location of the plurality small cells within the access node signal area comprises: determining a signal area for each small cell within the access node signal area; and determining a region for each small cell that indicates channel conditions for wireless devices within the determined signal area for each small cell, wherein the channel conditions comprise channel conditions for communication between the wireless devices and the access node.

In an embodiment, a system for scheduling transmissions between an access node and wireless devices is provided. The system includes a processing node with a processor. The processing node is configured to determine a location for a plurality of small cells within an access node signal area. The processing node is also configured to select, based on the determined locations for the plurality of small cells, a frame structure used by the access node to communicate with a plurality of wireless devices. And the processing node is configured to communicate data between the access node and a plurality of wireless devices based on the selected frame structure.

In an embodiment, determining the location of the plurality small cells within the access node signal area comprises determining the locations relative to the edge of the access node signal area and the location of the access node. In an embodiment, when a number of the plurality of small cells that comprise a location proximate to the edge of the access node signal area meets a threshold criteria, a frame structure that meets a downlink criteria is selected. In an embodiment, when a number of the plurality of small cells that comprise a location proximate to the location of the access node meets a threshold criteria, a frame structure that meets an uplink criteria is selected.

In an embodiment, the processing node is configured to determine a utilization for each of the plurality of small cells. In an embodiment, when a number of the plurality of small cells that comprise a location proximate to the edge of the access node signal area meets a threshold criteria and a utilization for the plurality of small cells that comprise a location proximate to the edge of the access node signal area meets a utilization criteria, a frame structure that meets a downlink criteria is selected.

In an embodiment, when a number of the plurality of small cells that comprise a location proximate to the location of the access node meets a threshold criteria and a utilization for the plurality of small cells that comprise a location proximate to the location of the access node meets a utilization criteria, a frame structure that meets an uplink criteria is selected.

In an embodiment, the processing node is configured to select, when a number of the plurality of small cells that comprise a location proximate to the edge of the access node signal area meets a threshold criteria, a frame structure that meets a downlink criteria for the access node, and select, when the number of the plurality of small cells that comprise a location proximate to the edge of the access node signal area meets a threshold criteria, a frame structure that meets an uplink criteria for the plurality of small cells that comprise a location proximate to the edge of the access node signal area.

In an embodiment, the processing node is configured to determine a utilization for the access node, and instruct the plurality of small cells that comprise a location proximate to the edge of the access node signal area to perform frame conflict blanking when the determined utilization for the access node meets a utilization criteria and not to perform frame conflict blanking when the determined utilization for the access nodes does not meet the utilization criteria.

In an embodiment, the plurality of small cells communicate with a plurality of wireless devices using the selected frame structure. In an embodiment, determining the location of the plurality small cells within the access node signal area comprises determining the wireless channel conditions for wireless devices covered by each small cell at the determined location, wherein the channel conditions comprise channel conditions for communication between the wireless devices and the access node.

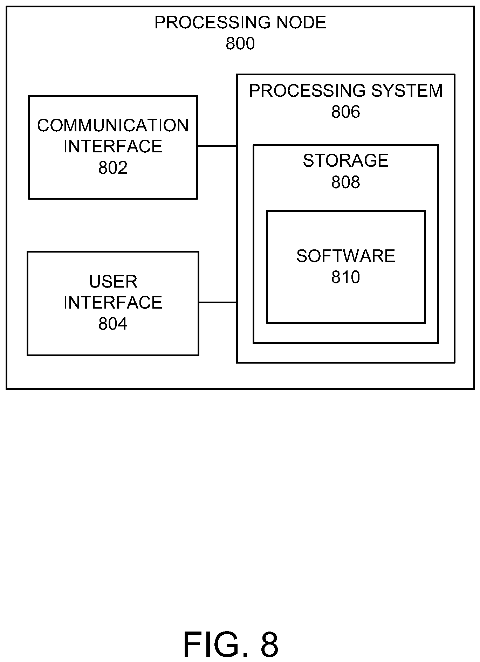

FIG. 8 illustrates an exemplary processing node 800 in a communication system. Processing node 800 comprises communication interface 802, user interface 804, and processing system 806 in communication with communication interface 802 and user interface 804. Processing node 800 can be configured to determine a communication access node for a wireless device. Processing system 806 includes storage 808, which can comprise a disk drive, flash drive, memory circuitry, or other memory device. Storage 808 can store software 810 which is used in the operation of the processing node 800. Storage 808 may include a disk drive, flash drive, data storage circuitry, or some other memory apparatus. Software 810 may include computer programs, firmware, or some other form of machine-readable instructions, including an operating system, utilities, drivers, network interfaces, applications, or some other type of software. Processing system 806 may include a microprocessor and other circuitry to retrieve and execute software 810 from storage 808. Processing node 800 may further include other components such as a power management unit, a control interface unit, etc., which are omitted for clarity. Communication interface 802 permits processing node 800 to communicate with other network elements. User interface 804 permits the configuration and control of the operation of processing node 800.

Examples of processing node 800 include controller node 408 and gateway node 410. Processing node 800 can also be an adjunct or component of a network element, such as an element of access nodes 106 or 406, an element of small cells 108 or 408, and the like. Processing node 800 can also be another network element in a communication system. Further, the functionality of processing node 800 can be distributed over two or more network elements of a communication system.

The exemplary systems and methods described herein can be performed under the control of a processing system executing computer-readable codes embodied on a computer-readable recording medium or communication signals transmitted through a transitory medium. The computer-readable recording medium is any data storage device that can store data readable by a processing system, and includes both volatile and nonvolatile media, removable and non-removable media, and contemplates media readable by a database, a computer, and various other network devices.

Examples of the computer-readable recording medium include, but are not limited to, read-only memory (ROM), random-access memory (RAM), erasable electrically programmable ROM (EEPROM), flash memory or other memory technology, holographic media or other optical disc storage, magnetic storage including magnetic tape and magnetic disk, and solid state storage devices. The computer-readable recording medium can also be distributed over network-coupled computer systems so that the computer-readable code is stored and executed in a distributed fashion. The communication signals transmitted through a transitory medium may include, for example, modulated signals transmitted through wired or wireless transmission paths.

The above description and associated figures teach the best mode of the invention. The following claims specify the scope of the invention. Note that some aspects of the best mode may not fall within the scope of the invention as specified by the claims. Those skilled in the art will appreciate that the features described above can be combined in various ways to form multiple variations of the invention, and that various modifications may be made to the configuration and methodology of the exemplary embodiments disclosed herein without departing from the scope of the present teachings. Those skilled in the art also will appreciate that various features disclosed with respect to one exemplary embodiment herein may be used in combination with other exemplary embodiments with appropriate modifications, even if such combinations are not explicitly disclosed herein. As a result, the invention is not limited to the specific embodiments described above, but only by the following claims and their equivalents.

## Claims

1. A method for scheduling transmissions from an access node (202), the method comprising:
determining locations for a plurality of small cells (204, 206, 208) within an access node signal area (210), wherein the determined locations are relative to an edge of the access node signal area (210) and a location of the access node (202);
selecting, based on the determined locations for the plurality of small cells (204, 206, 208), a scheduling algorithm for the access node (202) comprising one of a low proportional fairness scheduling algorithm, a medium proportional fairness scheduling algorithm, and a high proportional fairness scheduling algorithm; and
transmitting data from the access node (202) to a plurality of wireless devices based on the selected scheduling algorithm.

2. The method of claim 1, wherein, when a number of the plurality of small cells (204, 206, 208) that comprise a location proximate to the edge of the access node signal (210) area meets a threshold criteria, the low proportional fairness scheduling algorithm is selected for the access node (202).

3. The method of claim 1, wherein, when a number of the plurality of small cells (204, 206, 208) that comprise a location proximate to the location of the access node (202) meets a threshold criteria, the high proportional fairness scheduling algorithm is selected for the access node (202).

4. The method of claim 1, wherein, when a number of the plurality of small cells (204, 206, 208) that comprise a location proximate to the edge of the access node signal area (210) meets a threshold criteria and when a number of the plurality of small cells (204, 206, 208) that comprise a location proximate to the location of the access node (202) meets the threshold criteria, the medium proportional fairness scheduling algorithm is selected for the access node (202).

5. The method of claim 1, further comprising determining a utilization for each of the plurality of small cells (204, 206, 208).

6. The method of claim 1, wherein, when a number of the plurality of small cells (204, 206, 208) that comprise a location proximate to the edge of the access node signal (210) area meets a threshold criteria and a utilization for the plurality of small cells (204, 206, 208) that comprise a location proximate to the edge of the access node signal area (210) meets a utilization criteria, the low proportional fairness scheduling algorithm is selected for the access node (202).

7. The method of claim 5, wherein, when a number of the plurality of small cells (204, 206, 208) that comprise a location proximate to the location of the access node (202) meets a threshold criteria and a utilization for the plurality of small cells (204, 206, 208) that comprise a location proximate to the location of the access node (202) meets a utilization criteria, the high proportional fairness scheduling algorithm is selected for the access node (202).

8. The method of claim 1, wherein determining the location of the plurality small cells (204, 206, 208) within the access node signal area (210) comprises determining the wireless channel conditions for wireless devices covered by each small cell at the determined location, wherein the channel conditions comprise channel conditions for communication between the wireless devices and the access node (202).

9. The method of claim 1, wherein determining the location of the plurality small cells (204, 206, 208) within the access node signal area (210) comprises:
determining a signal area for each small cell within the access node signal area (210); and
determining a region for each small cell that indicates channel conditions for wireless devices within the determined signal area for each small cell, wherein the channel conditions comprise channel conditions for communication between the wireless devices and the access node (202).

10. A system for scheduling transmissions from an access node (202), the system comprising:
a processing node with a processor configured to:
determine locations for a plurality of small cells (204, 206, 208) within an access node signal area (210), wherein the determined locations are relative to an edge of the access node signal area (210) and a location of the access node (202);
select, based on the determined locations for the plurality of small cells (204, 206, 208), a scheduling algorithm for the access node (202) comprising one of a low proportional fairness scheduling algorithm, a medium proportional fairness scheduling algorithm, and a high proportional fairness scheduling algorithm; and
transmit data from the access node (202) to a plurality of wireless devices based on the selected scheduling algorithm.

11. The system of claim 10, wherein, when a number of the plurality of small cells (204, 206, 208) that comprise a location proximate to the edge of the access node signal area (210) meets a threshold criteria, the low proportional fairness scheduling algorithm is selected for the access node.

12. The system of claim 10, wherein, when a number of the plurality of small cells (204, 206, 208) that comprise a location proximate to the edge of the access node signal area (210) does not meet a threshold criteria and when a number of the plurality of small cells (204, 206, 208) that comprise a location proximate to the location of the access node (202) does not meet the threshold criteria, the medium proportional fairness scheduling algorithm is selected for the access node (202).

13. The system of claim 12, wherein, when a number of the plurality of small cells (204, 206, 208) that comprise a location proximate to the edge of the access node signal area (210) meets a threshold criteria and a utilization for the plurality of small cells (204, 206, 208) that comprise a location proximate to the edge of the access node signal area (210) meets a utilization criteria, the low proportional fairness scheduling algorithm is selected for the access node (202).

14. The system of claim 12, wherein, when a number of the plurality of small cells (204, 206, 208) that comprise a location proximate to the location of the access node (202) meets a threshold criteria and a utilization for the plurality of small cells (204, 206, 208) that comprise a location proximate to the location of the access node (202) meets a utilization criteria, the high proportional fairness scheduling algorithm is selected for the access node (202).

15. The system of claim 10, wherein determining the location of the plurality small cells (204, 206, 208) within the access node signal area (210) comprises:
determining a signal area for each small cell within the access node signal area (210);
determining a region for each small cell that indicates channel conditions for wireless devices within the determined signal area for each small cell, wherein the channel conditions comprise channel conditions for communication between the wireless devices and the access node (202).

## Patentansprüche

1. Verfahren zum Scheduling von Übertragungen von einem Zugangsknoten (202), wobei das Verfahren die Schritte aufweist:
Bestimmen von Orten für mehrere Kleinzellen (204, 206, 208) innerhalb eines Zugangsknotensignalbereichs (210), wobei die bestimmten Orte relativ zu einem Rand des Zugangsknotensignalbereichs (210) und einem Ort des Zugangsknotens (202) angeordnet sind;
Auswählen eines Scheduling-Algorithmus für den Zugangsknoten (202), der einen Algorithmus unter einem Low-Proportional-Fairness-Scheduling-Algorithmus, einem Medium-Proportional-Fairness-Scheduling-Algorithmus und einem High-Proportional-Fairness-Scheduling-Algorithmus aufweist, basierend auf den bestimmten Orten für die mehreren Kleinzellen (204, 206, 208); und
Übertragen von Daten von dem Zugangsknoten (202) an mehrere Drahtlosgeräte basierend auf dem ausgewählten Scheduling-Algorithmus.

2. Verfahren nach Anspruch 1, wobei, wenn eine Anzahl der mehreren Kleinzellen (204, 206, 208) an einem Ort in der Nähe des Randes des Zugangsknotensignalbereichs (210) ein Schwellenwertkriterium erfüllen, der Low-Proportional-Fairness-Scheduling-Algorithmus für den Zugangsknoten (202) ausgewählt wird.

3. Verfahren nach Anspruch 1, wobei, wenn eine Anzahl der mehreren Kleinzellen (204, 206, 208) an einem Ort in der Nähe des Orts des Zugangsknotens (202) ein Schwellenwertkriterium erfüllen, der High-Proportional-Fairness-Scheduling-Algorithmus für den Zugangsknoten (202) ausgewählt wird.

4. Verfahren nach Anspruch 1, wobei, wenn eine Anzahl der mehreren Kleinzellen (204, 206, 208) an einem Ort in der Nähe des Randes des Zugangsknotensignalbereichs (210) ein Schwellenwertkriterium erfüllen, und wenn eine Anzahl der mehreren Kleinzellen (204, 206, 208) an einem Ort in der Nähe des Orts des Zugangsknotens (202) das Schwellenkriterium erfüllen, der Medium-Proportional-Fairness-Scheduling-Algorithmus für den Zugangsknoten (202) ausgewählt wird.

5. Verfahren nach Anspruch 1, ferner mit dem Bestimmen einer Auslastung für jede der mehreren Kleinzellen (204, 206, 208).

6. Verfahren nach Anspruch 1, wobei, wenn eine Anzahl der mehreren Kleinzellen (204, 206, 208) an einem Ort in der Nähe des Randes des Zugangsknotensignalbereichs (210) ein Schwellenwertkriterium erfüllen und eine Auslastung für die mehreren Kleinzellen (204, 206, 208) an einem Ort in der Nähe des Randes des Zugangsknotensignalbereichs (210) ein Auslastungskriterium erfüllen, der Low-Proportional-Fairness-Scheduling-Algorithmus für den Zugangsknoten (202) ausgewählt wird.

7. Verfahren nach Anspruch 5, wobei, wenn eine Anzahl der mehreren Kleinzellen (204, 206, 208) an einem Ort in der Nähe des Orts des Zugangsknotens (202) ein Schwellenwertkriterium erfüllen und eine Auslastung für die mehreren Kleinzellen (204, 206, 208) an einem Ort in der Nähe des Orts des Zugangsknotens (202) ein Auslastungskriterium erfüllen, der High-Proportional-Fairness-Scheduling-Algorithmus für den Zugangsknoten (202) ausgewählt wird.

8. Verfahren nach Anspruch 1, wobei das Bestimmen des Orts der mehreren Kleinzellen (204, 204, 206, 208) innerhalb des Zugangsknotensignalbereichs (210) das Bestimmen der Drahtloskanalbedingungen für Drahtlosgeräte aufweist, die durch jede Kleinzelle an dem bestimmten Ort abgedeckt werden, wobei die Kanalbedingungen Kanalbedingungen für eine Kommunikation zwischen den Drahtlosgeräten und dem Zugangsknoten (202) aufweisen.

9. Verfahren nach Anspruch 1, wobei das Bestimmen des Orts der mehreren Kleinzellen (204, 204, 206, 208) innerhalb des Zugangsknotensignalbereichs (210) aufweist:
Bestimmen eines Signalbereichs für jede Kleinzelle innerhalb des Zugangsknotensignalbereichs (210); und
Bestimmen eines Bereichs für jede Kleinzelle, der die Kanalbedingungen für Drahtlosgeräte innerhalb des bestimmten Signalbereichs für jede Kleinzelle anzeigt, wobei die Kanalbedingungen Kanalbedingungen für eine Kommunikation zwischen den Drahtlosgeräten und dem Zugangsknoten (202) aufweisen.

10. System zum Scheduling von Übertragungen von einem Zugangsknoten (202), wobei das System aufweist:
einen Verarbeitungsknoten mit einem Prozessor, der dafür konfiguriert ist:
Orte für mehrere Kleinzellen (204, 206, 208) innerhalb eines Zugangsknotensignalbereichs (210) zu bestimmen, wobei die bestimmten Orte relativ zu einem Rand des Zugangsknotensignalbereichs (210) und einem Ort des Zugangsknotens (202) angeordnet sind;
basierend auf den bestimmten Orten für die mehreren Kleinzellen (204, 206, 208) einen Scheduling-Algorithmus für den Zugangsknoten (202) auszuwählen, der einen Algorithmus unter einem Low-Proportional-Fairness-Scheduling-Algorithmus, einem Medium-Proportional-Fairness-Scheduling-Algorithmus und einem High-Proportional-Fairness-Scheduling-Algorithmus aufweist; und
basierend auf dem ausgewählten Scheduling-Algorithmus Daten vom Zugangsknoten (202) an mehrere Drahtlosgeräten zu übertragen.

11. System nach Anspruch 10, wobei, wenn eine Anzahl der mehreren Kleinzellen (204, 206, 208) an einem Ort in der Nähe des Randes des Zugangsknotensignalbereichs (210) ein Schwellenwertkriterium erfüllen, der Low-Proportional-Fairness-Scheduling-Algorithmus für den Zugangsknoten (202) ausgewählt wird.

12. Verfahren nach Anspruch 1, wobei, wenn eine Anzahl der mehreren Kleinzellen (204, 206, 208) an einem Ort in der Nähe des Randes des Zugangsknotensignalbereichs (210) ein Schwellenwertkriterium nicht erfüllen, und wenn eine Anzahl der mehreren Kleinzellen (204, 206, 208) an einem Ort in der Nähe des Orts des Zugangsknotens (202) das Schwellenkriterium nicht erfüllen, der Medium-Proportional-Fairness-Scheduling-Algorithmus für den Zugangsknoten (202) ausgewählt wird.

13. System nach Anspruch 12, wobei, wenn eine Anzahl der mehreren Kleinzellen (204, 206, 208) an einem Ort in der Nähe des Randes des Zugangsknotensignalbereichs (210) ein Schwellenwertkriterium erfüllen, und wenn eine Auslastung für die mehreren Kleinzellen (204, 206, 208) an einem Ort in der Nähe des Randes des Zugangsknotensignalbereichs (210) ein Auslastungskriterium erfüllen, der Low-Proportional-Fairness-Scheduling-Algorithmus für den Zugangsknoten (202) ausgewählt wird.

14. System nach Anspruch 12, wobei, wenn eine Anzahl der mehreren Kleinzellen (204, 206, 208) an einem Ort in der Nähe des Orts des Zugangsknotensignalbereichs (210) ein Schwellenwertkriterium erfüllen und eine Auslastung für die mehreren Kleinzellen (204, 206, 208) an einem Ort in der Nähe des Orts des Zugangsknotens (210) ein Auslastungskriterium erfüllen, der High-Proportional-Fairness-Scheduling-Algorithmus für den Zugangsknoten (202) ausgewählt wird.

15. System nach Anspruch 12, wobei das Bestimmen des Orts der mehreren Kleinzellen (204, 204, 206, 208) innerhalb des Zugangsknotensignalbereichs (210) aufweist:
Bestimmen eines Signalbereichs für jede Kleinzelle innerhalb des Zugangsknotensignalbereichs (210);
Bestimmen eines Bereichs für jede Kleinzelle, der Kanalbedingungen für Drahtlosgeräte innerhalb des bestimmten Signalbereichs für jede Kleinzelle anzeigt, wobei die Kanalbedingungen Kanalbedingungen für eine Kommunikation zwischen den Drahtlosgeräten und dem Zugangsknoten (202) aufweisen.

## Revendications

1. Procédé de planification de transmissions à partir d'un nœud d'accès (202), le procédé comprenant :
la détermination d'emplacements pour une pluralité de petites cellules (204, 206, 208) à l'intérieur d'une zone de signal de nœud d'accès (210), où les emplacements déterminés le sont par rapport à un bord de la zone de signal de nœud d'accès (210) et un emplacement du nœud d'accès (202) ;
la sélection, sur la base des emplacements déterminés de la pluralité des petites cellules (204, 206, 208), d'un algorithme de planification pour le nœud d'accès (202) comprenant un algorithme parmi un algorithme de planification à faible équité proportionnelle, un algorithme de planification à équité proportionnelle moyenne, et un algorithme de planification à équité proportionnelle élevée ; et
la transmission de données à partir du nœud d'accès (202) à une pluralité de dispositifs sans fil sur la base de l'algorithme de planification choisi.

2. Procédé selon la revendication 1, dans lequel, lorsqu'un nombre de cellules de la pluralité de petites cellules (204, 206, 208) qui comprennent un emplacement à proximité du bord de la zone de signal de nœud d'accès (210) rencontre un critère de seuil, l'algorithme de planification à faible équité proportionnelle est choisi pour le nœud d'accès (202).

3. Procédé selon la revendication 1, dans lequel, lorsqu'un nombre de cellules de la pluralité de petites cellules (204, 206, 208) qui comprennent un emplacement à proximité de l'emplacement du nœud d'accès (202) rencontre un critère de seuil, l'algorithme de planification à équité proportionnelle élevée est choisi pour le nœud d'accès (202).

4. Procédé selon la revendication 1, dans lequel, lorsqu'un nombre de cellules de la pluralité de petites cellules (204, 206, 208) qui comprennent un emplacement à proximité du bord de la zone de signal de nœud d'accès (210) rencontre un critère de seuil, et lorsqu'un nombre de cellules de la pluralité de petites cellules (204, 206, 208) qui comprennent un emplacement à proximité de l'emplacement du nœud d'accès (202) rencontre le critère de seuil, l'algorithme de planification à équité proportionnelle moyenne est choisi pour le nœud d'accès (202).

5. Procédé selon la revendication 1, comprenant en outre la détermination d'une utilisation pour chacune de la pluralité des petites cellules (204, 206, 208).

6. Procédé selon la revendication 1, dans lequel, lorsqu'un nombre de cellules de la pluralité de petites cellules (204, 206, 208) qui comprennent un emplacement à proximité du bord de la zone de signal de nœud d'accès (210) rencontre un critère de seuil, et qu'une utilisation pour la pluralité de petites cellules (204, 206, 208) qui comprennent un emplacement à proximité de l'emplacement du bord de la zone de signal de nœud d'accès (210) rencontre un critère d'utilisation, l'algorithme de planification à faible équité proportionnelle est choisi pour le nœud d'accès (202).

7. Procédé selon la revendication 5, dans lequel, lorsqu'un nombre de cellules de la pluralité de petites cellules (204, 206, 208) qui comprennent un emplacement à proximité de l'emplacement du nœud d'accès (202) rencontre un critère de seuil, et qu'une utilisation pour la pluralité de petites cellules (204, 206, 208) qui comprennent un emplacement à proximité de l'emplacement du nœud d'accès (202) rencontre un critère d'utilisation, l'algorithme de planification à équité proportionnelle élevée est choisi pour le nœud d'accès (202).

8. Procédé selon la revendication 1, dans lequel la détermination de l'emplacement de la pluralité de petites cellules (204, 206, 208) dans la zone de signal de nœud d'accès (210) comprend la détermination des conditions du canal sans fil pour des dispositifs sans fil couverts par chaque petite cellule à un emplacement déterminé, où les conditions de canal comprennent des conditions de canal pour la communication entre les dispositifs sans fil et le nœud d'accès (202).

9. Procédé selon la revendication 1, dans lequel la détermination de l'emplacement de la pluralité de petites cellules (204, 206, 208) à l'intérieur de la zone de signal du nœud d'accès (210) comprend :
la détermination d'une zone de signal pour chaque petite cellule à l'intérieur de la zone de signal du nœud d'accès (210) ; et
la détermination d'une région pour chaque petite cellule qui indique des conditions de canal pour des dispositifs sans fil à l'intérieur de la zone de signal déterminée pour chaque petite cellule, où les conditions de canal comprennent des conditions de canal pour la communication entre les dispositifs sans fil et le nœud d'accès (202).

10. Système pour planifier des transmissions à partir d'un nœud d'accès (202), le système comprenant :
un nœud de traitement avec un processeur conçu pour :
déterminer des emplacements pour une pluralité de petites cellules (204, 206, 208) à l'intérieur d'une zone de signal de nœud d'accès (210), où les emplacements déterminés le sont par rapport à un bord de la zone de signal de nœud d'accès (210) et un emplacement du nœud d'accès (202) ;
sélectionner, sur la base des emplacements déterminés pour la pluralité des petites cellules (204, 206, 208), un algorithme de planification pour le nœud d'accès (202) comprenant un algorithme parmi un algorithme de planification à faible équité proportionnelle, un algorithme de planification d'équité proportionnelle moyenne et un algorithme de planification d'équité proportionnelle élevée ; et
transmettre des données à partir du nœud d'accès (202) à une pluralité de dispositifs sans fil sur la base de l'algorithme de planification choisi.

11. Système selon la revendication 10, dans lequel lorsqu'un nombre de cellules de la pluralité de petites cellules (204, 206, 208) qui comprennent un emplacement à proximité du bord de la zone de signal de nœud d'accès (210) rencontre un critère de seuil, l'algorithme de planification à faible équité proportionnelle est choisi pour le nœud d'accès (202).

12. Système selon la revendication 10, dans lequel lorsqu'un nombre de cellules de la pluralité de petites cellules (204, 206, 208) qui comprennent un emplacement à proximité du bord de la zone de signal de nœud d'accès (210) ne rencontre pas de critère de seuil, et lorsqu'un nombre de cellules de la pluralité de petites cellules (204, 206, 208) qui comprennent un emplacement à proximité de l'emplacement du nœud d'accès (202) ne rencontre pas de critère de seuil, l'algorithme de planification à équité proportionnelle moyenne est choisi pour le nœud d'accès (202).

13. Système selon la revendication 12, dans lequel lorsqu'un nombre de cellules de la pluralité de petites cellules (204, 206, 208) qui comprennent un emplacement à proximité du bord de la zone de signal de nœud d'accès (210) rencontre un critère de seuil, et qu'une utilisation pour la pluralité de petites cellules (204, 206, 208) qui comprennent un emplacement à proximité de l'emplacement du bord de la zone de signal de nœud d'accès (210) rencontre un critère d'utilisation, l'algorithme de planification à faible équité proportionnelle est choisi pour le nœud d'accès (202).

14. Système selon la revendication 12, dans lequel, lorsqu'un nombre de cellules de la pluralité de petites cellules (204, 206, 208) qui comprennent un emplacement à proximité de l'emplacement du nœud d'accès (202) rencontre un critère de seuil, et qu'une utilisation pour la pluralité de petites cellules (204, 206, 208) qui comprennent un emplacement à proximité de l'emplacement du nœud d'accès (202) rencontre un critère d'utilisation, l'algorithme de planification à équité proportionnelle élevée est choisi pour le nœud d'accès (202).

15. Système selon la revendication 10, dans lequel la détermination de l'emplacement de la pluralité de petites cellules (204, 206, 208) à l'intérieur de la zone de signal du nœud d'accès (210) comprend :
la détermination d'une zone de signal pour chaque petite cellule à l'intérieur de la zone de signal du nœud d'accès (210) ;
la détermination d'une région pour chaque petite cellule qui indique des conditions de canal pour des dispositifs sans fil à l'intérieur de la zone de signal déterminée pour chaque petite cellule, où les conditions de canal comprennent des conditions de canal pour la communication entre les dispositifs sans fil et le nœud d'accès (202).
